# EUROPEAN PATENT APPLICATION

(11) **EP 4 851 882 A1**
(43) Date of publication of application: **09.12.2026**
(21) Application number: 26183425.3
(22) Date of filing: 05.06.2026
(51) Int. Cl.: G06Q 10/04, G05B 13/04, G06Q 50/04, G06Q 50/06

(54) **SYSTEMS, APPARATUSES, METHODS, AND COMPUTER PROGRAM PRODUCTS FOR PLANTWIDE OPTIMIZATION OF PROCESSING PLANTS**

(30) Priority: 06.06.2025 US 202563818911 P; 04.06.2026 US 202619698515
(71) Applicant: Honeywell International Inc., Charlotte, NC 28202 (US)
(72) Inventor: LU, Joseph, Charlotte, 28202 (US)
(74) Representative: Haseltine Lake Kempner LLP

(57) **Abstract**

Systems, apparatuses, methods, and computer program products are provided herein. For example, a method may include generating a set of group specifications for a final product associated with a long-horizon optimized plan for a process plant based on a first model from one or more models. The method may include causing operation of one or more blenders associated with the process plant to output into a product tank connected to the one or more blenders, inventory corresponding to the final product with the first group specification. The method may include, in response to determining that the inventory within the product tank is associated with a predefined target amount, causing the product tank to transition from a receiving configuration to a holding configuration. The method may include initiating performance of one or more optimization actions.

## Description

### CROSS REFERENCE TO RELATED APPLICATIONS

This application claims priority to U.S. Provisional Application No. 63/818,911 filed June 6, 2025, which is incorporated herein by reference in its entirety.

### TECHNOLOGICAL FIELD

Embodiments of the present disclosure relate generally to plantwide optimization (PWO); and particularly to systems, apparatuses, methods, and computer program products for plantwide optimization of processing plants.

### BACKGROUND

Various embodiments of the present disclosure address technical challenges related to systems, apparatuses, methods, and computer program products for optimizing a plant. Through applied effort, ingenuity, and innovation many deficiencies of existing techniques and plantwide optimization systems have been solved by developing solutions that are in accordance with the embodiments as discussed herein, many examples of which are described in detail herein.

### BRIEF SUMMARY

Various embodiments described herein relate to systems, apparatuses, methods, and computer program products for plantwide optimization.

In accordance with one aspect of the present disclosure, a computer-implemented method for plantwide optimization is provided. In some embodiments, the computer-implemented method comprises generating a set of group specifications for a final product associated with a long-horizon optimized plan for a process plant based on a first model selected from one or more models, wherein the set of group specifications comprises a first group specification for a product parameter associated with the final product, and wherein the final product is associated with a group of product grades of the final product; causing operation of one or more blenders associated with the process plant to output into a product tank connected to the one or more blenders, inventory comprising the final product with the first group specification; in response to determining that the inventory within the product tank is associated with a predefined target amount, causing the product tank to transition from a receiving configuration to a holding configuration; and initiating performance of one or more optimization actions.

In some embodiments, the first model is selected from the one or more models based on a tunable parameter value associated with the first model.

In some embodiments, the one or more models comprise (i) a conservative model associated with a first tunable parameter value, (ii) an average-based model associated with a second tunable parameter value, and (iii) a greedy model associated with a third tunable parameter value.

In some embodiments, causing the product tank to transition from the receiving configuration to the holding configuration comprises causing the product tank to be disconnected from the one or more blenders.

In some embodiments, causing operation of the one or more blenders to output the final product comprises performing a short-horizon optimization process based at least in part on the long-horizon optimized plan to generate at least one optimized operational parameter; and applying the at least one optimized operational parameter to control at least one blender of the one or more blenders.

In some embodiments, the at least one optimized operational parameter corresponds to flowrate for at least one blender of the one or more blenders.

In some embodiments, initiating performance of the one or more optimization actions comprises assigning the inventory to a set of product demands associated with the final product.

In some embodiments, the set of product demands comprises a confirmed order corresponding to a first product grade.

In some embodiments, initiating performance of the one or more optimization actions comprises modifying the long-horizon optimized plan by removing an amount corresponding to inventory within the product tank from a target amount associated with the final product to generate a modified long-horizon optimized plan.

In some embodiments, initiating the performance of the one or more optimization actions comprises generating a second set of group specifications for a subsequent short-horizon optimization process based on the modified long-horizon optimized plan.

In some embodiments, the second set of group specifications comprises a second group specification for the product parameter associated with the final product, wherein the first group specification and the second group specification are different relative to each other.

In some embodiments, the first model comprises a conservative model, wherein the first group specification comprises one or more of an upper specification limit associated with a first product grade from the group of product grades or a lower specification limit associated with the first product grade from the group of product grades.

In some embodiments, initiating performance of one or more optimization actions comprises connecting the one or more blenders to a second product tank.

In some embodiments, initiating performance of one or more optimization actions comprises causing transmission of the inventory.

In accordance with another aspect of the present disclosure, an apparatus is provided. The apparatus in some embodiments includes at least one processor and at least one non-transitory memory, the at least one non-transitory memory having computer-coded instructions stored thereon. The computer-coded instructions in execution with the at least one processor causes the apparatus to perform any of the example computer-implemented methods described herein. In some other embodiments, the apparatus includes means for performing each step of any of the computer-implemented methods described herein.

In accordance with another aspect of the present disclosure, a computer program product is provided. The computer program product in some embodiments includes at least one non-transitory computer-readable storage medium having computer program code stored thereon. The computer program code in execution with at least one processor is configured for performing any one or the example computer-implemented methods described herein.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates an exemplary block diagram of an environment in which embodiments of the present disclosure may operate.
FIG. 2 illustrates an exemplary block diagram of an example apparatus that may be specially configured in accordance with at least one example embodiment of the present disclosure.
FIG. 3 illustrates an example flow sheet model in accordance with at least one example embodiment of the present disclosure.
FIG. 4 illustrates an example process unit representation in accordance with at least one example embodiment of the present disclosure.
FIGS. 5A-5B, illustrate example representations, data flows, and uses of optimization techniques in accordance with at least one example embodiment of the present disclosure.
FIG. 6 illustrates an example visualization of a lift schedule generation process in accordance with at least one example embodiment of the present disclosure.
FIG. 7 illustrates an example data flow for dual-horizon optimization in accordance with at least one example embodiment of the present disclosure.
FIG. 8 illustrates example representation of inventory associated with a final product in accordance with at least one example embodiments of the present disclosure.
FIG. 9 illustrates a data flow for configuring operation of a physical component in accordance with at least one example embodiment of the present disclosure.
FIG. 10 illustrates a flowchart of an example method in accordance with one or more embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the present disclosure may be embodied in many different forms and should not be construed as limited to the embodiments set forth herein, rather, these embodiments are provided so that this disclosure will satisfy applicable legal requirements. The term "or" is used herein in both the alternative and conjunctive sense, unless otherwise indicated.

The terms "illustrative" and "example" are used to be examples with no indication of quality level. Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated. Like numbers refer to like elements throughout.

It should be understood at the outset that although illustrative implementations of one or more aspects are illustrated below, the disclosed systems, apparatuses, methods, and computer program products may be implemented using any number of techniques, whether currently known or not yet in existence. The disclosure should in no way be limited to the illustrative implementations, drawings, and techniques illustrated below, but may be modified within the scope of the appended claims along with their full scope of equivalents. While values for dimensions of various elements may be disclosed, the drawings may not be to scale.

### Overview and Technical Improvements

Example embodiments disclosed herein address technical problems associated with systems, apparatuses, methods, and computer program products for optimizing a plant. As would be understood by one skilled in the field to which this disclosure pertains, there are numerous example scenarios in which systems, apparatuses, methods, and computer program products for optimizing a plant are desirable.

In many applications it may be desirable to use systems, apparatuses, methods, and computer program products for optimizing a plant. For example, it may be desirable to use systems, apparatuses, methods, and computer program products for optimizing a plant to improve the efficiency of the plant. As another example, it may be desirable to use systems, apparatuses, methods, and computer program products for optimizing a plant to control the emissions of the plant. As another example, it may be desirable to use systems, apparatuses, methods, and computer program products for optimizing a plant to control how much processed product the plant produces. As another example, it may be desirable to use systems, apparatuses, methods, and computer program products for optimizing a plant to control when a plant makes particular processed products instead of other processed products. As another example, it may be desirable to use systems, apparatuses, methods, and computer program products for optimizing a plant to control what particular processed products a plant makes instead of other processed products. As another example, it may be desirable to use systems, apparatuses, methods, and computer program products for optimizing a plant to manage maintenance actions associated with the plant.

Example systems for optimizing a plant include using a computing device to control the operations of the plant. Processing facilities/plants may be managed using industrial process control and automation systems. Such control and automation systems may include multiple hierarchical layers that perform different functions. For example, lower layers may include devices that perform process control functions and model predictive control (MPC) operations, while higher layers may include devices that provide plantwide optimization (PWO) solutions. In some applications, a plantwide controller may be used to control the master CVs (e.g., PWO primary CVs), while secondary controllers (e.g., secondary MPCs) control their respective CVs. Manipulatable variable linkage between the PWO layer and the secondary MPC layer may be used for optimization, with the PWO controller performing optimization operations to guide the secondary MPCs towards a globally optimal operating point.

However, such example systems are technically deficient. For example, such example systems are technically deficient because such example systems are unable to implement a framework for optimization that leverages the knowledge of future product demands (e.g., future orders) to maximize one or more target parameters, including maximizing profitability. For example, such example systems manually adjust production rates merely to balance inventory. As a result processing plant (also referred to herein as process plant), such as refineries, are run less steadily and inefficiently.

Thus, to address the above issues and/or other issues, example, systems, apparatuses, methods, and computer program products for optimization of processing plants are disclosed herein. Example embodiments of the present disclosure may be leveraged in various processing plants, including rundown refineries and hybrid refineries that leverage both batch and rundown blending. Example embodiments include PWO order management techniques that generates an m-day (where m is a configurable parameter) product demand profile to substantiate the long-term optimization in PWO. An example method disclosed herein include generating a set of group specifications for a final product associated with a long-horizon optimized plan for a process plant based on a first model selected from one or more models, wherein the set of group specifications comprises a first group specification for a product parameter associated with the final product, and wherein the final product is associated with a group of product grades of the final product. The example method further includes causing operation of one or more blenders associated with the process plant to output into a product tank connected to the one or more blenders, inventory comprising the final product with the first group specification. For example, some embodiments perform a short-horizon optimization process based at least in part on the long-horizon optimized plan to generate at least one optimized operational parameter, and apply the at least one optimized operational parameter to control at least one blender of the one or more blenders. For example, in some embodiments, the at least one optimized operational parameter corresponds to flowrate for at least one blender. The example method includes, in response to determining that the inventory within the product tank is associated with a predefined target amount, causing the product tank to transition from a receiving configuration to a holding configuration. For example, some example embodiments, cause the product tank to be disconnected from the one or more blenders in response to determining that the inventory within the product tank is associated with a predefined target amount corresponding to a product grade of the final product. Some example embodiments assign the inventory to a set of product demands associated with the final product. For example, the set of product demands may comprise a confirmed order corresponding to a first product grade.

Some embodiments modify the long-horizon optimized plan by removing an amount corresponding to inventory within the product tank from a target amount associated with the final product to generate a modified long-horizon optimized plan and generate a second set of group specifications for a subsequent short-horizon optimization process based on the modified long-horizon optimized plan. In some embodiments, the second set of group specifications comprises a second group specification for the product parameter associated with the final product, wherein the first group specification and the second group specification are different relative to each other.

Accordingly, the systems, apparatuses, methods, and computer program products provided herein are able effectively optimize a plant in a technically sufficient and proactive manner. In particular, example embodiments of the present disclosure enables rundown blending refineries and/or the like to achieve desired optimal target parameters without carrying the burden of high component tank costs.

### Definitions

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

As used herein, the terms "data," "content," "information," and similar terms may be used interchangeably to refer to data capable of being transmitted, received, or stored in accordance with embodiments of the present disclosure. Thus, use of any such terms should not be taken to limit the spirit and scope of embodiments of the present disclosure. Further, where a computing device is described herein to receive data from another computing device, it will be appreciated that the data may be received directly from another computing device or may be received indirectly via one or more intermediary computing devices, such as, for example, one or more servers, relays, routers, network access points, base stations, hosts, or the like, sometimes referred to herein as a "network." Similarly, where a computing device is described herein to send data to another computing device, it will be appreciated that the data may be sent directly to another computing device or may be sent indirectly via one or more intermediary computing devices, such as, for example, one or more servers, relays, routers, network access points, base stations, hosts, or the like.

As used herein, the term "circuitry" refers to particular hardware configured to perform the functions associated with the particular circuitry as described herein. In some embodiments, circuitry may be used as part of (a) hardware-only circuit implementations (e.g., implementations in analog circuitry or digital circuitry); (b) combinations of circuits and computer program product(s) comprising software or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. In some embodiments, "circuitry" may include processing circuitry, storage media, network interfaces, input/output devices, or the like. As a further example, as used herein, the term "circuitry" also includes an implementation comprising one or more processors or portion(s) thereof and accompanying software or firmware. As another example, the term "circuitry" as used herein also includes, for example, a baseband integrated circuit or applications processor integrated circuit for a mobile phone or a similar integrated circuit in a server, a cellular network device, other network device, or other computing device.

As used herein, a "computer-readable storage medium," refers to a physical storage medium (e.g., volatile, or non-volatile memory device), and may be differentiated from a "computer-readable transmission medium," which refers to an electromagnetic signal. A computer-readable storage medium may be a non-transitory medium.

As used herein, the terms "data structure," "data object," or "data set" refer interchangeably to data capable of being transmitted, received, or stored. For example, a predicted asset may be associated with one or more data elements or values in a computer-readable storage medium or computer-readable transmission medium, that represents content that is configured for use or display by one or more software applications, services, microservices, or the like.

As used herein, the terms "application," "software application," "app," "computer program," "service," or similar terms refer to a computer program or group of computer programs designed to perform coordinated functions, tasks, or activities. Such computer programs may be operated by or for the benefit of a user or group of users. An application may be configured to provide access to one or more services provided by an entity. For example, an application may be configured to provide access to services provided by visual media content provider systems. An application may run on a server or group of servers, such as, but not limited to, web servers and application servers. In some embodiments, an application may be run on or across one or more other computing devices (e.g., user devices). For example, an application may be configured to be accessed via a web browser (e.g., a website accessed via the Internet using a browser), a dedicated client running on a user device, or the like. In some examples, an application may be configured for use by and interaction with one or more local, networked or remote computing devices.

The term "client computing device," "client device" "client computing entity" and similar terms may be used interchangeably to refer to a computer comprising at least one processor and at least one memory. In some embodiments, the client computing device may further comprise one or more of: a display device for rendering one or more of a graphical user interface, a vibration motor for a haptic output, a speaker for an audible output, a mouse, a keyboard or touch screen, a global position system (GPS) transmitter and receiver, a radio transmitter and receiver, a microphone, a camera, a biometric scanner (e.g., a fingerprint scanner, an eye scanner, a facial scanner, etc.), or the like. Additionally, the term "client computing device" and the aforementioned similar terminology may refer to computer hardware or software that is configured to access a service or functionality offered by a system, for example, a service or functionality that is made available by a server. Such a server may be in a different location or another computing system, in which case the client computing device may access the server by way of a network. Client computing devices may include, without limitation, smart phones, tablet computers, kiosk, terminal, laptop computers, wearables, personal computers, enterprise computers, or the like. Client computing devices, as described herein, may communicate with or otherwise access a computing system, via one or more networks. In some embodiments, the at least one processor and the at least one memory need not be physically co-located with other elements of the client computing device (e.g., in a terminal environment, in which a display may be separated from a server-based processor or memory).

In some embodiments, a client computing device may be associated with a particular operator. In some embodiments, a client computing device may be a general purpose computing device having special purpose computer programming stored or executed thereon (e.g., a program, application, or web browser session running on a personal computer or smartphone). In some embodiments, a client computing device may be configured as a terminal or other remote viewing apparatus configured to display graphical user interfaces and associated information generated on a remote computing device. In some embodiments, a client computing device may be a special purpose computing device configured to perform the various functions described herein. Various embodiments of client computing devices may include, without limitation, smartphones, tablets, laptops, terminals, kiosks, personal computers, desktop computers, enterprise computers, or the like. Various embodiments of client computing devices may operate using different operating systems including, without limitation, IOS, ANDROID, WINDOWS, MACOS, LINUX, CHROME OS, or the like.

As used herein, the term "graphical user interface" refers to a representation of a software interface. For example, a graphical user interface may be the visual representation of a software such as a website, mobile application, desktop application, or the like, that may be used to generally interface with the software. By way of example, images, buttons, links, backgrounds, text fields, or the like, may be included within or make up a graphical user interface. In various examples, a graphical user interface may be configured for display on one or more screens (e.g., a screen of a mobile phone, a personal computer, or the like).

As used herein, the term "application programming interface" and "API" refers to a computing interface that defines indication inputs between applications, services, microservices, computing devices, repositories, or the like. An API may define formatting for one or more of a programming code call, request, function, procedure, notification, data object, data structure, or the like. Non-limiting examples of an application programming interface may include JavaScript Object Notation (JSON), Extensible Markup Language (XML), Simple Object Access Protocol (SOAP), Hypertext Markup Language (HTML), the like, or combinations thereof.

As used herein, the term "repository," "database," and similar terms may be used interchangeably to refer to a computing location associated with a system where data is stored, accessed, modified, and otherwise maintained by the system. A repository may be used to store data in association with a data storage protocol or a query language. In certain embodiments, a repository may embody a data storage device or devices, a separate database server or servers, or as a combination of data storage devices and separate database servers. Further, in some embodiments, a repository may be embodied as a distributed repository such that some of the stored data is stored centrally in a location within the repository and other data stored in a single remote location or a plurality of remote locations. Alternatively, in some embodiments, a repository may be distributed over a plurality of remote storage locations only such as in a cloud storage environment.

As used herein, the term "machine learning model" refers to one or more processes, algorithms, or other data entity that describes parameters, hyper-parameters, defined operations, or defined mappings of a model that is configured to process one or more inputs in accordance with one or more trained parameters of the machine learning models in order to generate a prediction. An example of a machine learning model is a mathematically derived algorithm (MDA). An MDA may comprise any algorithm trained using training data to predict one or more outcome variables. Without limitation, an MDA, as used herein, may comprise machine learning frameworks including neural networks, deep neural networks, generative adversarial networks, convolutional neural networks, recurrent neural networks, large language models, generative pre-trained transformers (GPT), support vector machines, gradient boosts, decision trees, random forests, Markov models, adaptive Bayesian techniques, and statistical models (e.g., timeseries-based forecast models such as autoregressive models, autoregressive moving average models, or an autoregressive integrating moving average models). Additionally, and without limitation, an MDA, as used in the singular, may include ensembles using multiple machine learning or statistical techniques.

As used herein, the term "processing plant" and "process plant" refers to any building, complex, or arrangement of components that perform a chemical, physical, electrical, or mechanical process for converting input materials into one or more output products. Non-limiting examples of a processing plant include a chemical processing plant and an oil refinery plant.

As used herein, the term "physical component" refers to a real-world machine, tank, pipe, or other physical structure within a processing plant that is utilized in a process performed by the processing plant. In an example context of an oil refinery plant, non-limiting examples of a physical component include a component storage tank, a blender, a product tank, a pump, a heat exchanger, a pressure vessel, a pipe or piping system, and a valve.

As used herein, the term "physical layout" refers to physical components and connections such physical components of a processing plant. In some embodiments, the physical layout of a processing plant enables a flow or other transmission of objects, liquid, and/or other flow components between particular physical components.

The term "mode" refers to a configuration of behavior utilized by a physical component that defines what process(es) the physical component is to perform and/or how the physical component performs the one or more process(es). In some embodiments, a mode of a physical component alters the inputs received by the physical component, the processes performed by the physical component to process such component(s), and/or the outputs of the physical component.

As used herein, the term "blender" refers to specialized machinery that is configurable to receive, process, and/or combine inputs into a particular product. In one example context, a blender receives input products and processes such input products to produce a particular desired final output product.

As used herein, the term "rundown blender" refers to a physical component embodying a blender that is configured to utilize one or more physical connection(s) to blend one or more input(s) to product a final output product that is not stored in any intermediary storage tank upon blending.

As used herein, the term "optimization process" refers to one or more algorithm(s), function(s), model(s), and/or other computer-executed mathematical maximizations or minimizations of one or more target value(s) during production of one or more particular amounts of final product(s) utilizing a rundown blender.

The term "crude flow unit" refers to a physical component that provides crude oil having determinable properties to one or more other physical component(s).

The term "optimized operational parameter" refers to a value for a particular configurable parameter utilized to operate a physical component or connection between two physical components determined to optimize one or more target values utilizing one or more optimization model(s) and/or process(es).

The term "optimized amount" with respect to a particular product refers to an amount of a final product that is to be produced via a processing plant to optimize one or more target variables. In one example context, an optimized amount for each product of a plurality of products refers to the amount of each of such products to be produced to maximize a particular target variable, such as a profit variable.

The term "operation" with respect to a physical component refers to one or more behavior(s) performed by the physical component.

As used herein, the term "lift schedule" refers to electronically managed data representing timestamps and/or timestamp intervals at or during which particular final product(s) are to be output from a processing plant. In some embodiments, a lift schedule corresponds to a pickup schedule that defines timestamps or timestamp intervals at which final products will be exported from the processing plant to another location, thus freeing up storage capacity within one or more physical component(s) of the processing plant.

The term "time interval" refers to a range of time defined by two or more timestamps.

The term "time slice" refers to electronically managed data representing a defined time interval.

The term "user-facing interface" refers to any electronically renderable visual output producible for viewing by an end user.

As used herein, the term "flowsheet model" refers to a renderable format for representing physical component(s), connection(s) between said physical component(s), and/or flow of inputs and/or products between such physical component(s), utilizing one or more graph element(s).

The term "target parameter" refers to a particular property, data value, or other element to be optimized via an optimization process. In some embodiments, a target parameter represents a property having a particular value that is to be maximized or minimized during optimization. Non-limiting examples of a target parameter include profitability, throughput, and waste.

The term "plant characteristic" refers to electronically managed data that represents a particular property of a processing plant or determination regarding a processing plant. Non-limiting examples of a plant characteristic include a number of virtual blenders associated with a processing plant, a number of physical blenders associated with a processing plant, whether the processing plant is agile, whether a target parameter is impacted by one or more changing condition(s) of the processing plant, and the final products that can be produced by the processing plant.

The term "dual-horizon optimization process" refers to a process for generating data for use in optimizing operation of a processing plant in a manner that maximizes and/or minimizes one or more target parameter(s) as desired utilizing at least a long-horizon optimization process and a short-horizon optimization process.

The term "long-horizon optimization process" refers to a process that generates data that informs operation of a processing plant associated with a future time interval. In some embodiments, a long-horizon optimization process generates target amounts of one or more final product(s) to be produced via a corresponding processing plant over a particular timestamp interval to optimize one or more target parameter(s) over the particular timestamp interval.

As used herein, the term "inventory" refers to a quantity of material stored within or received by a physical storage unit, such as a product tank. In some embodiments, inventory within a product tank may be associated with a particular product grade of a final product based on the specifications of the inventory. In some embodiments, inventory may be assigned a status, such as a "ready" status, based on satisfaction of one or more conditions. In some embodiments, inventory may be assigned to one or more product demands, such as confirmed orders, based on predefined rules.

The term "short-horizon optimization process" refers to a process that generates data that informs real-time operation of a processing plant. In some embodiments, a short-horizon optimization process generates configurations and/or target product(s) to be produced by a processing plant in real-time.

The term "long-horizon optimized plan" refers to one or more parameter(s) representing the output of a long-horizon optimization process. In some embodiments, a long-horizon optimized plan includes at least target amount(s) for one or more final product(s) that optimizes one or more target parameter(s) over a timestamp interval by balancing both short-term and long-term requirements of a processing plant. One example long-horizon optimized plan includes target amount(s) of final product(s) optimized over a m-day timestamp interval to balance supply-and-demand of such final products in a manner that maximizes profitability of an oil refinery.

The term "short-horizon optimized plan" refers to one or more optimized operational parameter(s) representing the output of a short-horizon optimization process generated via a dual-horizon optimization process. In some embodiments, a short-horizon optimized plan includes at least a set of planned moves to operate a processing plant. In some embodiments, a short-horizon optimized plan is subject to change as time continues, while still being guided by the long-horizon optimized plan.

The term "plant configuration result data" refers to one or more data identifiers that represents plant characteristic(s) of a processing plant and/or particular determination(s) associated with a processing plant.

The term "concurrent products" refers to one or more final product(s) indicated to be produced over a particular timestamp interval in a long-horizon optimized plan produced via a long-horizon optimization process.

### EXAMPLE SYSTEMS AND APPARATUSES

Various embodiments of the present disclosure may be implemented as methods, apparatus, systems, computing devices, computer program products, or the like. As such, embodiments of the present disclosure may take the form of an apparatus, system, computing device, computing entity, or the like executing instructions stored on a computer-readable storage medium to perform certain steps or operations. Thus, embodiments of the present disclosure may take the form of an entirely hardware embodiment, an entirely computer program product embodiment, or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, or apparatus, systems, computing devices, computing devices, or the like carrying out instructions, operations, steps, and similar words used interchangeably (e.g., the executable instructions, instructions for execution, program code, or the like) on a computer-readable storage medium for execution. For example, retrieval, loading, and execution of code may be performed sequentially such that one instruction is retrieved, loaded, and executed at a time. In some example embodiments, retrieval, loading, or execution may be performed in parallel such that multiple instructions are retrieved, loaded, or executed together. Thus, such embodiments may produce specifically configured machines performing the steps or operations specified in the block diagrams and flowchart illustrations. Accordingly, the block diagrams and flowchart illustrations support various combinations of embodiments for performing the specified instructions, operations, or steps.

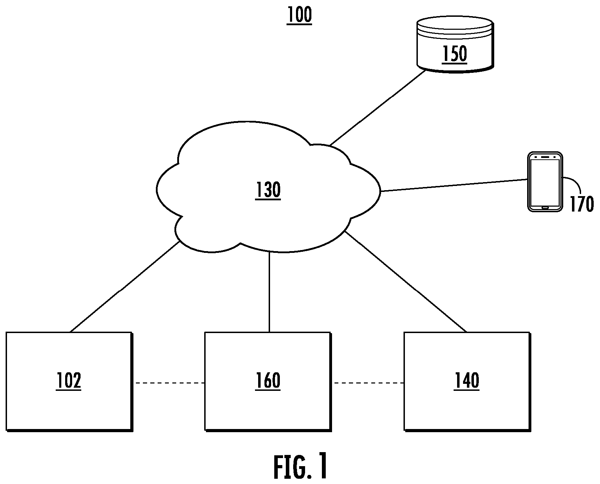

In this regard, FIG. 1 shows an example system environment 100 (e.g., industrial process control and automation system environment 100) within which at least some embodiments of the present disclosure may operate. The depiction of the example system environment 100 is not intended to limit or otherwise confine the embodiments described and contemplated herein to any particular configuration of elements or systems, nor is it intended to exclude any alternative configurations or systems for the set of configurations and systems that can be used in connection with embodiments of the present disclosure. Rather, FIG. 1 and the system environment 100 disclosed therein is merely presented to provide an example basis and context for the facilitation of some of the features, aspects, and uses of the methods, apparatuses, computer readable media, and computer program products disclosed and contemplated herein.

The system environment 100 implements an order management system configured to perform techniques/operations described herein, including PWO order management. For example, the system environment 100 may represent or comprise an industrial process control and automation system that implements an order management system. In this regard, the system environment 100 provides the infrastructure for performing PWO order management according to techniques described herein.

In some embodiments, the PWO order management according to at least one example embodiment of the present disclosure may be configured to generate an m-day product demand profile to substantiate long-term optimization, where m is a configurable parameter representing a planning horizon (e.g., 10-14 days). The PWO order management may include receiving and processing confirmed product orders, aggregating product demands across multiple product grades into product groups, and generating group specifications for use in plantwide optimization. In some embodiments, the PWO order management tracks inventory levels in product tanks, manages the transition of product tanks between receiving and holding configurations, and assigns inventory to product demands based on configurable rules. The PWO order management may support asynchronous inventory tracking based on, for example, real-time product lifting flow rates, enabling the lift scheduling to be decoupled from plant economics. In some embodiments, the PWO order management may be configured to define product groups during design phase. In some example implementations, the PWO order management associates each product group with one or more physical blenders, wherein each blender has one or more linked product tanks that can rotate in or out of a group when certain conditions are met.

The system environment includes a plant 102. In some embodiments, for example, the plant 102 may be any type of plant associated with the environment 100. In this regard, the plant 102 may, for example, be a processing plant that receives and processes input ingredients to create a processed product, such as a hydrocarbon processing plant, a refinery, a pulp and paper plant, a chemical plant, an alumina plant, a drilling facility, a fracking field, and/or the like.

The plant 102 in some embodiments includes any number of individual physical processing units. The physical processing units of the plant 102 may perform a particular function during operation of the plant 102. For example, the physical processing units may include one or more well physical processing units, fracking physical processing units, crude processing physical processing units (e.g., crude processing physical processing units having a vacuum section), hydrotreating physical processing units, isomerization physical processing units, reforming physical processing units, vapor recovery physical processing units, fluid catalytic cracking physical processing units, batch blending physical processing units, rundown blending physical processing units, hydrocracking physical processing units, alkylation physical processing units, dewaxing physical processing units, deasphalter physical processing units (e.g., propane deasphalter physical processing units), aromatics reduction physical processing units, delayed cooker physical processing units, visbreaker physical processing units, digester physical processing units, thermomechanical grinding physical processing units, bleaching physical processing units, blender physical processing units, pump physical processing units, flash venting physical processing units, compressor physical processing units, cooler physical processing units (e.g., air cooler physical processing units), sensor physical processing units, flare physical processing units, heating, ventilation, and air (HVAC) physical processing units, lighting physical processing units, and/or the like that perform a particular operation for transforming, separating, reacting, reforming, digesting, bleaching, storing, releasing, and/or otherwise handling one or more input ingredients, intermediate ingredients, and/or processed products (e.g., hydrocarbons, gases, etc.). In this regard, for example, the individual physical processing units of the plant 102 may include physical processing units associated with a particular process performed by the plant 102.

The plant 102 in some embodiments includes any number of individual physical streams. The physical streams of the plant 102 may perform a particular function during operation of the plant 102. For example, the physical streams may include one or more liquefied petroleum gas physical streams, straight-run gasoline physical streams, naphtha physical streams, middle distillates physical streams, crude physical streams, heavy atmospheric gasoil physical streams, vacuum gasoil physical streams, lube base stocks physical streams, fuel gas physical streams, light gasoil physical streams, gasoline physical streams, fractionator bottoms physical streams, fuel oil physical streams, asphalt physical streams, refinery fuel physical streams, regular gasoline physical streams, solvents physical streams, aviation fuel physical streams, diesel physical streams, heating oil physical streams, lube oil physical streams, grease physical streams, industrial fuel physical streams, wood chip physical streams, brown stock physical streams, white liquor physical streams, bleached pulp physical streams, and/or the like that perform a particular operation for transforming, storing, releasing, transporting, and/or otherwise handling one or more input ingredients, intermediate ingredients, and/or processed products (e.g., hydrocarbons, gases, etc.). In this regard, for example, the individual physical streams of the plant 102 may include physical streams associated with a particular process performed by the plant 102.

The plant 102 in some embodiments includes any number of individual physical storage units. The physical storage units may perform a particular function during operation of the plant 102. For example, the physical storage units may include one or more input physical storage units, intermediate physical storage units, component physical storage units, processed product physical storage units, and/or the like that perform a particular operation for transforming, storing, releasing, transporting, and/or otherwise handling one or more input ingredients, intermediate ingredients, and/or processed products (e.g., hydrocarbons, gases, etc.). In this regard, for example, the individual physical streams of the plant 102 may include physical storage units associated with a particular process performed by the plant 102.

In some embodiments, each individual physical processing unit, each individual physical storage unit, and/or each individual physical stream of the plant 102 is associated with a determinable location. The determinable location of a particular physical processing unit, physical storage unit, and/or physical stream in some embodiments represents an absolute position (e.g., GPS coordinates, latitude, and longitude locations, and/or the like) or a relative position (e.g., a point representation of the location of a physical processing unit, physical storage unit, and/or physical stream from a local origin point corresponding to the plant 102). In some embodiments, a physical processing unit, physical storage unit, and/or physical stream includes or otherwise is associated with a location sensor and/or software-driven location services that provide the location data representing the location corresponding to that physical processing unit, physical storage unit, and/or physical stream. In other embodiments the location of a physical processing unit, physical storage unit, and/or physical stream is stored and/or otherwise predetermined within a software environment, provided by a user and/or otherwise determinable to one or more systems.

Additionally, or alternatively, in some embodiments, the plant 102 itself is associated with a determinable location. The determinable location of the plant 102 in some embodiments represents an absolute position (e.g., GPS coordinates, latitude and longitude locations, an address, and/or the like) or a relative position of the plant 102 (e.g., an identifier representing the location of the plant 102 as compared to one or more other plants, one or more other buildings, an enterprise headquarters, or general description in the world for example based at least in part on continent, state, or other definable region). In some embodiments, the plant 102 includes or otherwise is associated with a location sensor and/or software-driven location services that provide the location data corresponding to the plant 102. In other embodiments, the location of the plant 102 is stored and/or otherwise determinable to one or more systems.

The network 130 may be embodied in any of a myriad of network configurations. In some embodiments, the network 130 may be a public network (e.g., the Internet). In some embodiments, the network 130 may be a private network (e.g., an internal localized, or closed-off network between particular devices). In some other embodiments, the network 130 may be a hybrid network (e.g., a network enabling internal communications between particular connected devices and external communications with other devices). In various embodiments, the network 130 may include one or more base station(s), relay(s), router(s), switch(es), cell tower(s), communications cable(s), routing station(s), and/or the like. In various embodiments, components of the environment 100 may be communicatively coupled to transmit data to and/or receive data from one another over the network 130. Such configuration(s) include, without limitation, a wired or wireless Personal Area Network (PAN), Local Area Network (LAN), Metropolitan Area Network (MAN), Wide Area Network (WAN), and/or the like.

In some embodiments, the environment 100 may include a master controller 140 (e.g., MPC controller). In some embodiments, for example, the master controller 140 may be configured to optimize one or more plants (e.g., plant 102), such as by performing an optimization operation. In this regard, for example, the master controller 140 may be configured to optimize operations of the plant 102. The master controller 140 may be electronically and/or communicatively coupled to the plant 102, individual physical processing units of the plant 102, individual physical storage units of the plant 102, individual physical streams of the plant 102, one or more databases 150, one or more secondary controllers 160 (e.g., slave MPC controller(s) 160), and/or one or more user devices 170. The master controller 140 may be located remotely, in proximity of, and/or within the plant 102. In some embodiments, the master controller 140 is configured via hardware, software, firmware, and/or a combination thereof, to perform data intake of one or more types of data associated with one or more of the plant 102, individual physical processing units of the plant 102, individual physical storage units of the plant 102, individual physical streams of the plant 102, one or more databases 150, the secondary controller 160, and/or one or more user devices 170. Additionally, or alternatively, in some embodiments, the master controller 140 is configured via hardware, software, firmware, and/or a combination thereof, to generate and/or transmit command(s) that control, adjust, or otherwise impact operations of plant 102, individual physical processing units of the plant 102, individual physical storage units of the plant 102, individual physical streams of the plant 102, one or more databases 150, the secondary controller 160, and/or one or more user devices 170, for example for controlling one or more operations of the plant 102. Additionally, or alternatively still, in some embodiments, the master controller 140 is configured via hardware, software, firmware, and/or a combination thereof, to perform data reporting and/or other data output process(es) associated with monitoring or otherwise analyzing operations of plant 102, individual physical processing units of the plant 102, individual physical storage units of the plant 102, individual physical streams of the plant 102, one or more databases 150, the secondary controller 160, and/or one or more user devices 170, for example for generating and/or outputting report(s) corresponding to the operations performed via the plant 102. For example, in various embodiments, the master controller 140 may be configured to execute and/or perform one or more operations and/or functions described herein.

In some embodiments, the master controller 140 leverages a coarse-scale model, such as a flow sheet model, planning model, and/or other suitable reduced model(s) to facilitate performance of one or more functions of the master controller 140. For example, the master controller 140 may use a flow sheet model/planning model (e.g., a yield-based single period model or the like) to provide an initial steady-state gain matrix, and relevant model dynamics may be determined using operational data of the plant 102. In some embodiments, the master controller 140 may use the flow sheet model/planning model to provide a dynamic gain matrix. In some example implementations, the master controller 140 may operate to control product inventories, manufacturing activities, and/or product qualities within the plant 102. For example, in some embodiments, the master controller 140 may be configured to perform plantwide optimization (e.g., using an embedded optimizer thereof) to control production inventories, manufacturing activities, or product qualities inside the plant 102. By way of example, the embedded optimizer of the master controller 140, may provide offline planning optimization but in an online and real-time manner. The optimizer may execute at user-defined frequency such as, for example, in the range of once every minute to once an hour. In various embodiments, if deviations from the original optimal plan is detected, a plantwide re-optimization may be performed. In some embodiments, the output of the re-optimization may be sent to and implemented by the one or more secondary controllers.

The coarse-scale model may identify multiple process units. In some embodiments, the coarse-scale model represents a "bird's eye" view of the entire plant (or portion thereof), and thus represents individual process units on a coarse scale. The coarse-scale model may focus on the inter-unit steady relationships pertaining to unit productions, product qualities, material and energy balances, and/or manufacturing activities inside the plant 102. The coarse-scale model may include one or more process yield models and product quality properties. In some embodiments, the coarse-scale model may exclude non-production-related variables, such as pressures, temperatures, tank levels, and/or valve opening within each unit. In such embodiments, for example, the coarse-scale model may reduce the process unit to one or several material or energy yield vectors. In some examples, the coarse-scale model may comprise a planning model constructed from a combination of various sources, such as planning tools, scheduling tools, yield validation tools, and/or historical operation data. Such planning models are described in detail in U.S. Patent No. 9,733,629 and, to supplement the present disclosure, this application incorporates entirely by reference U.S. Patent No. 9,733,629.

A secondary controller 160 may be electronically and/or communicatively coupled to the plant 102, individual physical processing units of the plant 102, individual physical storage units of the plant 102, individual physical streams of the plant 102, one or more databases 150, the master controller 140, and/or one or more user devices 170. The secondary controller 160 may be located remotely, in proximity of, and/or within the plant 102. In some embodiments, the secondary controller 160 is configured via hardware, software, firmware, and/or a combination thereof, to perform data intake of one or more types of data associated with one or more of the plant 102, individual physical processing units of the plant 102, individual physical storage units of the plant 102, individual physical streams of the plant 102, one or more databases 150, the master controller 140, and/or one or more user devices 170. Additionally, or alternatively, in some embodiments, the secondary controller 160 is configured via hardware, software, firmware, and/or a combination thereof, to generate and/or transmit command(s) that control, adjust, or otherwise impact operations of plant 102, individual physical processing units of the plant 102, individual physical storage units of the plant 102, individual physical streams of the plant 102, one or more databases 150, the master controller 140, and/or one or more user devices 170, for example for controlling one or more operations of the plant 102. Additionally, or alternatively still, in some embodiments, the secondary controller 160 is configured via hardware, software, firmware, and/or a combination thereof, to perform data reporting and/or other data output process(es) associated with monitoring or otherwise analyzing operations of plant 102, individual physical processing units of the plant 102, individual physical storage units of the plant 102, individual physical streams of the plant 102, one or more databases 150, the master controller 140, and/or one or more user devices 170, for example for generating and/or outputting report(s) corresponding to the operations performed via the plant 102. For example, in various embodiments, the secondary controller 160 may be configured to execute and/or perform one or more operations and/or functions described herein.

In various embodiments, the master controller 140 is cascaded on top of the one or more secondary controllers 160. In this regard, in some embodiments, the master controller 140 (e.g., master MPC) and the one or more secondary controllers 160 (e.g., secondary MPC(s)) may collectively define a cascaded MPC architecture. In some such embodiments, the one or more secondary controllers 160 may interact with one or more process controllers. For example, in some embodiments, the one or more secondary controllers 160 may represent level 3 controllers, while the one or more process controllers may represent level 2 controllers. Each of the master controller 140 and the one or more secondary controllers 160 may be configured to support plantwide optimization and/or multivariable control functions. In some embodiments, plantwide optimization (or plantwide control) comprises optimization or control of multiple units in an industrial facility, regardless of whether those multiple units represent every single unit in the industrial facility. A secondary controller 160, for example, may be configured to optimize operations of an individual physical processing unit of the plant 102. In some embodiments, the one or more secondary controllers 160 may provide the master controller 140 with predictions, operating states, and/or constraints for each of one or more units of the plant 102. In this regard, in such some embodiments, the plantwide optimization from the master controller 140 may honor the unit-level operating techniques from the one or more secondary controllers 160. The MPC cascade technique, for example, may enable embedded real-time planning solutions to honor lower-level operating constraints.

The one or more secondary controllers 160 may use a secondary controller model that includes various operating variable for control purposes in order to ensure the safe and effective operation of a unit. In various embodiments, the secondary controller model may include more variables for a unit compared to the primary model of the master controller 140. As one non-limiting example, the secondary controller model for an oil refinery's Fluidized Catalytic Cracking unit (FCCU) may include about 100 secondary control CVs (e.g., outputs) and 40 secondary control MVs (e.g., inputs), where the planning model for the FCCU focus only on key causal relationships between the feed quality and operation modes (as inputs) and the FCCU product yield and quality (as outputs).

In some embodiments, the master controller 140 and/or the secondary controller 160 is associated with one or more CVs. In some embodiments, a CV is a variable and/or parameter that is controlled such that the CV's value is at or near a setpoint and/or within a desired range. Said differently, for example, a CV may be a variable and/or parameter that is the output of an optimization operation performed by the master controller 140 and/or the secondary controller 160. For example, a CV may be a variable and/or parameter that is representative of an output of a hydrocracking physical processing unit (e.g., an output of a hydrocracker).

In some embodiments, the master controller 140 and/or the secondary controller 160 is associated with one or more MVs. In some embodiments, a MV is a variable and/or parameter that is manipulated, moved, operated, and/or adjusted in order to alter the value of one or more CVs. Said differently, for example, a MV may be a variable and/or parameter that is the input of an optimization operation performed by the master controller 140 and/or the secondary controller 160. For example, a MV may be a variable and/or parameter that is representative of an input to a hydrocracking physical processing unit (e.g., a physical stream into a hydrocracker).

In some embodiments, one or more MVs may be conjoint MVs (e.g., a pair of conjoint MVs). In some embodiments, a conjoint MV is a MV that is the same variable (e.g., the same MV) for both the master controller 140 and/or the secondary controller 160. For example, a conjoint MV may be a variable and/or parameter that is representative of an input to a hydrocracking physical processing unit.

In some embodiments, the master controller 140 and one or more secondary controllers 160 may be configured to implement model predictive control (MPC) in order to optimize the plant 102, such as by performing an optimization operation. In this regard, in some embodiments, the master controller 140 may comprise an independent controller using a reduced model. In order for the master controller 140 to cascade over the one or more secondary controllers 160, the master controller 140 honors the constraints of the one or more secondary controllers 16, otherwise it may not be optimal or feasible to implement optimization of the plant 102. In some embodiments, to help avoid this situation, a proxy limit technique is used to merge multiscale models. In some embodiments, a proxy limit technique is a technique for representing the constraint(s) (e.g., limits of the constraints associated with MVs and/or CVs) of the secondary controller 160 in a master controller MV space associated with the master controller 140. In some embodiments, the system environment 100 may be implemented using a Purdue model of process control. Such proxy limit techniques, model predictive control, and Purdue model of process control are described in detail in U.S. Patent No. 10,379,503 and U.S. Patent No. 9,733,629 and, to supplement the present disclosure, this application incorporates entirely by reference U.S. Patent No. 10,379,503 and U.S. Patent No. 9,733,629.

The one or more databases 150 may be configured to receive, store, and/or transmit data. In some embodiments, the one or more databases 150 may be associated with data associated with the plant 102. In some embodiments, the data may be received from the plant 102. In this regard, for example, the plant 102 may have one or more sensors that capture data and/or one or more datastores that store data. In some embodiments, the data may be received from the master controller 140 and/or the secondary controller 160. In this regard, for example, the master controller 140 and/or the secondary controller 160 may be configured to identify data associated with the plant 102. In some embodiments, the one or more databases 150 may be associated with data received from the plant 102, the master controller 140, and/or the secondary controller 160 in real-time. Additionally, or alternatively, the one or more databases 150 may be associated with data received from the plant 102, the master controller 140, and/or the secondary controller 160 on a periodic basis (e.g., the data may be received from the plant 102, the master controller 140, and/or the secondary controller 160 once per day). Additionally, or alternatively, the one or more databases 150 may be associated with data received from the plant 102, the master controller 140, and/or the secondary controller 160 in response to a request for the data. Additionally, or alternatively, the one or more databases 150 may be associated with data inputted (e.g., by a user) into the master controller 140, the secondary controller 160, and/or the one or more user devices 170.

The one or more user devices 170 may be associated with users of the master controller 140. In various embodiments, the master controller 140 may generate and/or transmit a message, alert, or indication to a user via a user device 170. Additionally, or alternatively, a user device 170 may be utilized by a user to remotely access the master controller 140 and/or the secondary controller 160. This may be by, for example, an application operating on the user device 170. A user may access the master controller 140 remotely, including one or more visualizations, reports, and/or real-time displays.

Additionally, while FIG. 1 illustrates certain components as separate, standalone entities communicating over the network 130, various embodiments are not limited to this configuration. In other embodiments, one or more components may be directly connected and/or share hardware or the like. For example, in some embodiments, the master controller 140 may include the one or more databases 150, which may collectively be located in or at the plant 102.

It will be understood that while many of the aspects and elements presented in FIG. 1 are shown as discrete, separate elements, other configurations may be used in connection with the methods, apparatuses, computer readable media, and computer programs described herein, including configurations that combine, omit, separate, or add aspects or elements. The various functions of the system environment 100 may be performed by other arrangements of one or more computing devices or computing systems without departing from the scope of the present disclosure. For example, in some embodiments, the functions of one or more of the illustrated elements in FIG. 1 may be performed by a single computing device or by multiple computing devices, which devices may be local or cloud based.

Additionally, while FIG. 1 illustrates certain components as separate, standalone entities communicating over the network 130, various embodiments are not limited to this configuration. In other embodiments, one or more components may be directly connected and/or share hardware or the like. For example, in some embodiments, the master controller 140 may include the one or more databases 150, which may collectively be located in or at the plant 102.

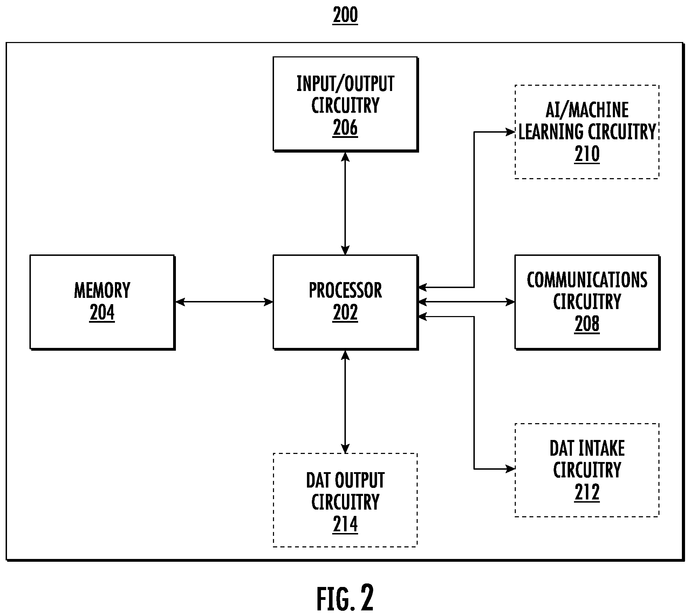

FIG. 2 illustrates an exemplary block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. For example, the computing apparatus 200 may be embodied as one or more of a specifically configured personal computing apparatus, a specifically configured cloud-based computing apparatus, a specifically configured embedded computing device (e.g., configured for edge computing, and/or the like). Examples of an apparatus 200 may include, but is not limited to, a master controller 140, the secondary controller 160, the one or more databases 150, and/or a user device 170. In some embodiments, the apparatus 200 implements an order management system, according to techniques described herein. The apparatus 200 includes processor 202, memory 204, input/output circuitry 206, communications circuitry 208, and/or optional artificial intelligence ("AI") and machine learning circuitry 210, data intake circuitry 212, or data output circuitry 214. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as computing apparatus 200 of the master controller 140, the secondary controller 160, and/or of the user device 170 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 (or processor circuity 202) may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 (or memory circuitry 204) may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors, and/or other external computing device(s) in communication with the apparatus 200.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured for facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the plant 102. In some embodiments, the data intake circuitry 212 includes hardware, software, firmware, and/or a combination thereof, that communicates with one or more sensor(s) unit(s), and/or the like within the plant 102 to receive particular data associated with such operations of the plant 102. Additionally, or alternatively, in some embodiments, the data intake circuitry 212 includes hardware, software, firmware, and/or a combination thereof, that retrieves particular data associated with the plant 102 from one or more data repository/repositories accessible to the apparatus 200.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect to the AI and machine learning circuitry 210.

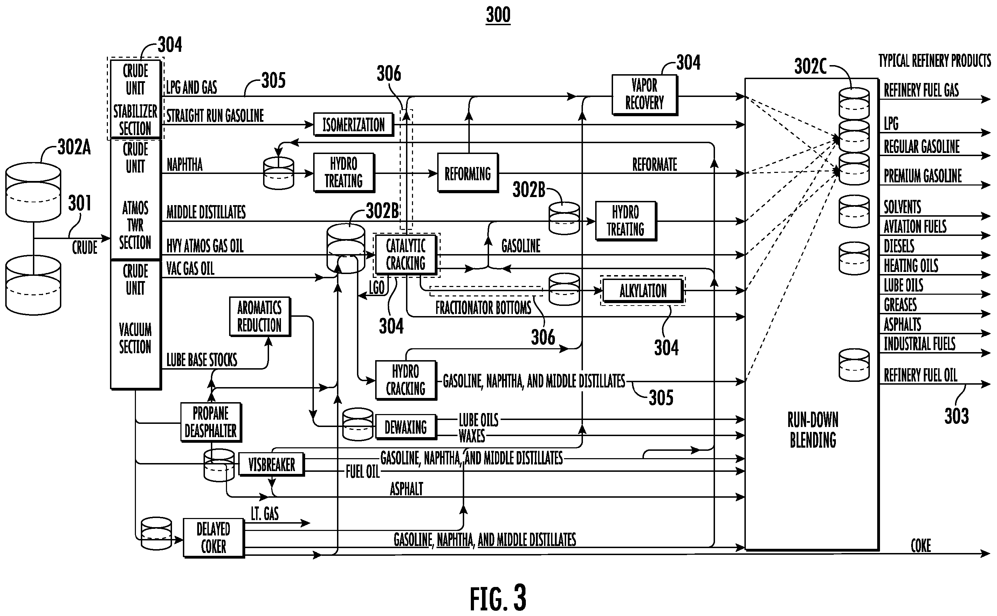

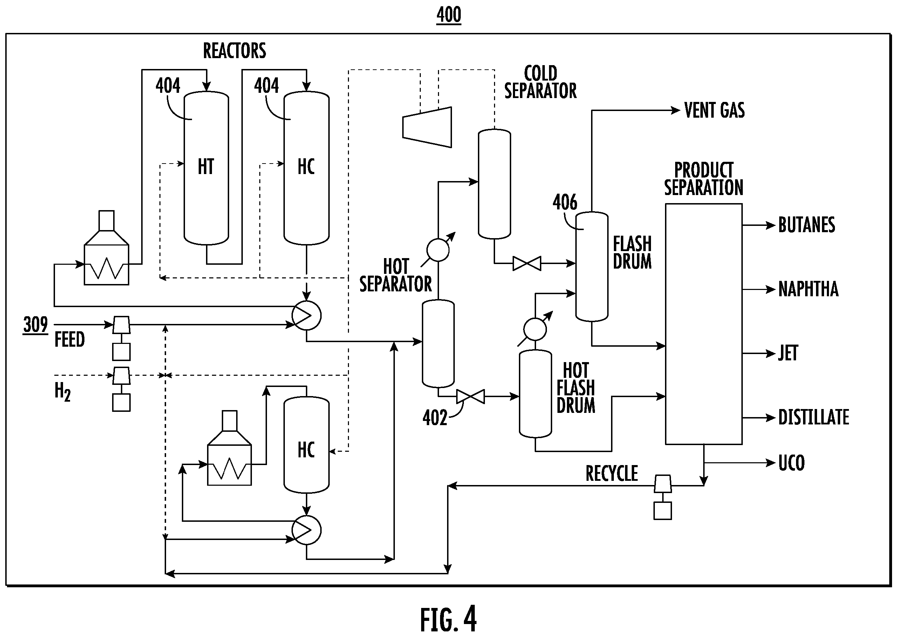

With reference to FIGS. 3 and 4, in some embodiments, the master controller 140 and/or one or more secondary controllers 160 is configured to generate one or more models. In some embodiments, the master controller 140 and/or the one or more secondary controllers 160 is configured generate the one or more models using operational data. In some embodiments, operational data includes one or more items of data representative and/or indicative of operations of the plant 102. For example, operational data may be representative of any number of physical processing units, physical storage units, and/or physical streams included in the plant 102 (e.g., which physical processing units, physical storage units, and/or physical streams are included in the plant 102). As another example, operational data may be representative of one or more statuses associated with the plant 102 (e.g., what type of processed product the plant 102 is generating). In this regard, in some embodiments, the master controller 140 and/or the one or more secondary controllers 160 is configured to receive operational data from the plant 102 and use the operational data to generate one or more models. Additionally, or alternatively, the master controller 140 and/or the one or more secondary controllers 160 is configured to receive the one or more models. For example, the master controller 140 and/or the one or more secondary controllers 160 may be configured to receive the one or more models from the plant 102 and/or one or more external computing devices (e.g., the plant 102 and/or one or more external computing devices may be configured to generate the one or more models).

In some embodiments, the one or more models comprise a master controller model leveraged by the master controller 140 to facilitate and/or perform one or more functions of the master controller 140 and a secondary controller model leveraged by a secondary controller 160 to facilitate and/or perform one or more functions of the secondary controller 160. In this regard, in some embodiments, the master controller 140 may be configured to generate or receive a master controller model and a secondary controller 160 may be configured to generate or receive a secondary controller model.

In some embodiments, the master controller model comprises a flow sheet model 300. FIG. 3 illustrates a flow sheet model 300 of an example processing plant virtualized for optimization in accordance with at least an example embodiment of the present disclosure. In this regard, the flow sheet model 300 represents a virtualized representation of the processing plant, for example that may be utilized for purposes of performing one or more optimization process. In some embodiments, the flow sheet model 300 is representative of a physical layout of an example processing plant 102. As illustrated, the example processing plant 102 is an oil refinery. It will be appreciated that in other embodiments, other processing plants may be utilized.

The flow sheet model 300 includes a plurality of physical representations. In some embodiments, each physical representation is embodied by an element within the flow sheet model 300 as depicted. Each element may represent a particular physical component within the processing plant itself. Additionally, the flow sheet model 300 may define physical connections between said physical components. In this regard, input products/input streams may flow between such physical components based on such physical connections, for example for use in producing one or more final products via the processing plant represented by the flow sheet model 300.

As illustrated, the flow sheet model 300 includes one or more physical representation(s) of storage units 302 (e.g. 302A-C) and one or more physical representation(s) of physical processing unit(s) 304. For example, the flow sheet model 300 may identify a plurality of physical processing units 304, which may operate to convert one or more input streams 301 of feed material (e.g., input product) into one or more output streams 303 of processed materials (e.g., final product). Additionally, the flow sheet model 300 may identify a plurality of physical storage units 302, which may operate to receive and/or store one or more processing materials or one or more final products. In some embodiments, the one or more processing materials include one or more input ingredients. For example, the one or more input ingredients may include raw materials and/or ingredients upon which the plant 102 has not performed any processing (e.g., crude oil). In some embodiments, the one or more processing materials include one or more intermediate ingredients. For example, the one or more intermediate ingredients may include partially processed materials and/or partially processed ingredients upon which the plant 102 has performed some processing but has not completed processing. In some embodiments, the one or more final product include one or more processed products. For example, the one or more processed products may include processed materials and/or processed products upon which the plant 102 has completed processing (e.g., regular gas, premium gas, aviation fuel, diesels, and/or the like).

In some embodiments, the plurality of physical storage units 302 includes any number of the types of physical storage units described above. For example, the plurality of physical storage units 302 may include one or more input physical storage units 302A. In some embodiments, the one or more input physical storage units 302A are configured to receive and/or store processing materials that include one or more input ingredients. As another example, the plurality of physical storage units 302 may include one or more intermediate physical storage units 302B. In some embodiments, the one or more intermediate physical storage units 302B are configured to receive and/or store processing materials that include one or more intermediate ingredients. As another example, the plurality of physical storage units 302 may include one or more processed product physical storage units 302C (e.g., product tanks 302C). In some embodiments, the one or more processed product physical storage units 302C are configured to receive and/or store one or more final products.

In some embodiments, the plurality of physical processing units 304 include any number of the types of physical processing units described above. In the illustrated example, the plurality of physical processing units 304 comprise physical processing units 304 in an oil ang gas refinery that convert an input stream 301 (e.g., crude oil) into a plurality of output streams 303 (e.g., different refined oil/gas products). Various intermediate components 305 may be generated by the plurality of physical processing units 304, and one or more intermediate physical storage units 302B may be used to store one or more of the intermediate components 305.

In some embodiments, the flow sheet model 300 is representative of a plurality of physical streams 306 of the plant 102. In some embodiments, the plurality of physical streams 306 include any number of the types of physical streams described above. For example, the plurality of physical streams 306 may include a naphtha physical stream. Additionally, or alternatively, the master controller model is representative of one or more relationships and/or connections between the plurality of physical storage units 302, the plurality of physical processing units 304, and/or the plurality of physical streams 306. For example, the flow sheet model 300 may indicate that one or more of the plurality of physical storage units 302 are connected to one or more of the plurality of physical processing units 304 via one or more of the plurality of physical streams 306.

In some embodiments, the processing units depicted in the physical representations of processing units 304 source a particular product, utilize the product as input, and/or process incoming input products in a particular manner. For example, as illustrated, the physical representations of processing units 304 includes crude flow units, hydro treating processing units, reforming processing units, isomerization processing units, aromatics reduction processing units, and the like. Such processing units are depicted as connected via physical connections to one or more other upstream and/or downstream processing unit(s). It will be appreciated that any number, type, and/or configuration of processing units may be included in a particular processing plant.

In some embodiments, one or more of the physical representations of processing units 304 each flow to one or more particular physical representation(s) of product tank(s) 302C via one or more physical blenders. As illustrated, the one or more of the physical representations of processing units 304 may be connected to one or more physical representations of physical rundown blenders to provide input product to the one or more physical representations of physical rundown blenders for processing by the physical rundown blenders. For example, each physical rundown blender may be connected to one or more processing units or otherwise configured to receive input product from one or more physical processing units and output final product to one or more product tanks 302C. In this regard, in some embodiments, a physical representation of a product tank 302C may be operably and dynamically linked/connected to a physical rundown blender. At a particular time slice, the physical rundown blender may be configured to output a particular target product to a product tank 302C linked/connected to the physical rundown blender, for example based at least in part on input product(s) received via the processing unit(s) represented by the physical representations of processing units 304.

In this regard, each physical rundown blender may correspond to a processing unit and a final storage for a particular type of final product. Such processing plants do not include intermediary storage tanks, for example that store intermediary input components utilized by the product tank(s), that would serve as a buffer for use in producing particular final products. In some embodiments, a processing plant utilizing such rundown blending does not include any intermediary storage tank. In other embodiments, a processing plant utilizing rundown blending has some intermediary storage tank(s), but includes a limited amount of intermediary storage tanks. It will be appreciated that different processing plants may include different number, configuration, and/or types of blenders.

The physical representations of the processing plant in some embodiments correspond to the current operation of the physical component(s) therein. In this regard, the flow sheet model 300 provides visibility only into the final product(s) currently being produced, and does not provide insight or knowledge into what final product(s) is/are next. In this regard, optimization for the current operation alone may result in a myopic or otherwise insufficient optimization-for example that leads to current operation that is better profitable now but reduces long-term profitability of the processing plant.

In some embodiments, the secondary controller model comprises a virtualized representation of process unit. FIG. 4 illustrates an example process unit virtualized for optimization in accordance with tat least an example embodiment of the present disclosure. Specifically, FIG. 4 depicts an example process unit representation 400 of a process unit. In this regard, the secondary controller model may be representative of a layout of a process unit. The example process unit representation 400 includes a plurality of physical representations. In some embodiments, each physical representation is embodied by an element within the example process unit representation 400 as depicted. Each element may represent a particular physical component within the process unit itself. Additionally, the process unit representation 400 may define physical connections between the physical components.

By way of example, and as shown in the illustrated example process unit representation 400, the one or more components may comprise one or more valves and/or other actuators 402 leveraged to adjust operations within the processing unit; one or more reactors 404, one or more flash drums 406, one or more physical storage units, and/or other components of the processing unit. In some embodiments, the one or more physical storage units includes any number of the types of physical storage units described above. In some embodiments, the process unit representation 400 is representative of a plurality of physical streams of the processing unit. In some embodiments, the plurality of physical streams includes any number of the types of physical streams described above. For example, the plurality of physical streams may include hydrogen feed 309 and/or other input feed. Additionally, or alternatively, the process unit representation 400 is representative of one or more relationships and/or connections between the plurality of components and physical streams of the processing unit. For example, the process unit representation 400 may indicate connections and/or relationships between components (e.g., reactors 404, flash drum 406, and/or the like) and/or physical streams within the processing unit.

In some embodiments, the master controller model excludes non-production related variables such as pressures, temperatures, tank levels, and valve openings within the processing units. In this regard, the master controller model may reduce a processing unit to one or several material or energy yield vectors. The secondary controller model may include various operating variables for control purposes in order to, for example, facilitate safe and effective operation of the processing unit. In this regard, the secondary controller model may comprise more variables for a processing unit relative to the master controller model. As one non-limiting example, the secondary controller model for an oil refinery's fluidized catalytic cracking unit (FCCU) may include about 100 secondary controller CVs (e.g., outputs) and 40 secondary controller MVs (e.g., inputs), where the master controller model for the FCCU focus only on key causal relationships between the feed quality and operation modes (as inputs) and the FCCU product yield and quality (as outputs). In this regard, in some embodiments, the master controller model may represent a coarse-scale model and the secondary controller model may represent a finer-scale model. In some examples, a secondary controller model's time horizon may range from minutes to hours, while a master controller model's time horizon may range from days to months.

In some examples, raw ingredients may be converted into intermediate components in a continuous process and the intermediate components converted into final products in a continuous process. Because different process units have different yield profiles, how the feed is distributed to the process units may influence, directly or indirectly, the amount of components produced. This, in turn, may influence the amount of final products produced and what ingredients go into each product (in the refinery example). For example, if "u" is assumed to be all of the conjoint variables, such as unit feed rates and yield-altering variables, and "G" is the corresponding model matrix, then G*u represents the models for the component flow rates and their properties, as shown in the equation 1 below: $G ⋅ u = \left[\begin{matrix}{G}_{F} \\ {G}_{q}\end{matrix}\right] ⋅ u , u = conjoint MVs$ Equation 1

It will be appreciated that G is partitioned into *G_{F}* and *G_{q}. G_{F} . u* represents the flow rates of the components produced while *G_{q}. u* represents their properties such as their qualities. In some cases, the mass of material balance, as represented by the *G_{F}* part, functions as constraint during optimization. Objectives can be set up based on the user's needs. For example, based on whether the user want to maximize yield or maximize product value. Integrators may be added in *G_{F}* to model storage unit levels for the intermediate components if needed.

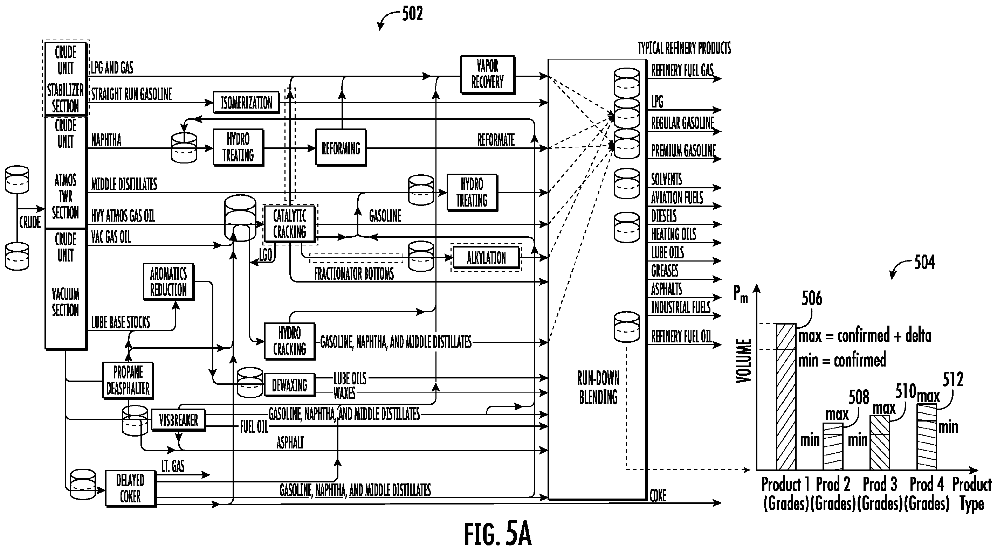

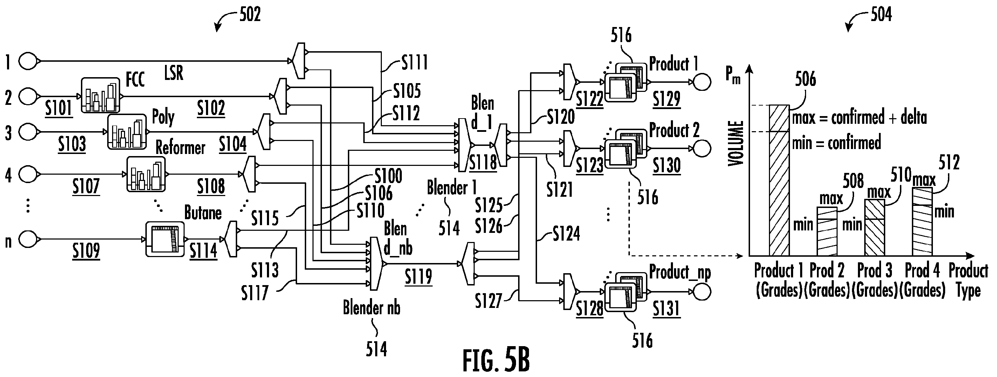

Referring to FIGS. 5A-5B, example representations, data flows, and uses of optimization techniques according to at least some embodiments of the present disclosure is provided. In various embodiments, the optimization techniques described herein includes long-horizon optimization and short-horizon optimization. In this regard, FIG. 5 illustrates a visualization of a long-horizon optimization and a short horizon optimization in a dual horizon optimization process in accordance with at least an example embodiment of the present disclosure. Specifically, FIG. 5 illustrates a visualization of a long-horizon optimized plan 504 and a visualization of short-horizon optimized plan. It will be appreciated that the apparatus 200, in some embodiments, maintains one or more computing environments that enable the data flows as depicted and described. In this regard, the apparatus 200 may implement the optimization process(es) and/or uses thereof alone or in conjunction with one or more other system(s), for example processing plant system(s) associated with a particular processing plant.

The visualization of the long-horizon optimized plan 504 embodies a bar graph including at least different target amounts of different final products to be generated by a particular processing plant such as, for example, the processing plant 102 as described herein. The vertical axis provides an indication of a target amount, while the horizontal axis provides an indication of a final product type. At least one final product of the different final products represented in the long-horizon optimized plan 504 may represent a group of product grades associated with the final product. In some embodiments, each final product represented in the long-horizon optimized plan 504 may represent a group of product grades associated with the respective final product. In this regard, in some embodiments, the visualization of the long-horizon optimized plan 504 embodies a bar graph including at least different amounts of different final products and/or different amounts of different product grades for a given final product. The target amount of a particular final product represented in the long-horizon optimized plan 504 may be based on the individual target amount of the product grades in the group of product grades defined by or otherwise represented by the particular final product.

The visualization of the long-horizon optimized plan 504 includes particular target amounts for the final products that reflects individual amounts for the corresponding product grades thereof and that optimizes one or more target parameters. For example, in some embodiments, the target amounts correspond to volumes of final products to be produced over a particular timestamp interval (e.g., the next m-days) to maximize a profitability parameter associated with the processing plant, where a target amount for a particular final product may be based on or otherwise reflect individual target amounts for the product grades associated with the particular final product.

As illustrated, the visualization of the long-horizon optimized plan 504 includes a target amount visualization 506 corresponding to a first final product representative of a group of product grades associated with the first final product, a target amount visualization 508 corresponding to a second final product representative of a group of product grades associated with the second final product, a target amount visualization 510 corresponding to a third final product representative of a group of product grades associated with the third final product, and a target amount visualization 512 corresponding to a fourth final product representative of a group of product grades associated with the fourth final product. It will be appreciated that a long-horizon optimized plan may include any number of final products, and/or any different target amounts. It will be appreciated that a target amount for a particular final product may reflect individual target amounts for any number of product grades. For example, a final product may be associated with any number of product grades. It will be appreciated that the number of product grades may be the same or different for different final products. By way of example, the first final product may be associated with four product grades, the second final product may be associated with two product grades, the third final product may be associated with three product grades, and the fourth final product may be associated with two product grades.

In this regard, the visualization of a target amount of a final product may represent a visualization of the aggregate of individual target amounts for the product grades associated with the final product. By way of example, the visualization of the target amount of a first final product may represent a visualization of the sum of the individual target amounts for a first product grade, a second product grade, a third product grade, and a fourth product grade associated with the first final product. By way of another example, the visualization of the target amount of a second final product may represent a visualization of the sum of the individual target amounts for a first product grade, a second product grade, and a third product grade associated with the second final product. By way of yet another example, the visualization of the target amount of a third final product may represent a visualization of the individual target amount for a single product grade associated with the third final product.

By way of yet another example, a particular final product may represent regular gas with different product grades, premium gas with different premium gas grades, jet fuel with different jet fuel grades, diesel fuel with different diesel fuel grades. In some examples, the product grades may be based on or otherwise associated with particular time periods or seasons. For example, a particular final product may represent a group of diesel grades for different time periods. In some embodiments, the apparatus 200 may be configured to define the group of product grades represented by a given particular final product. For example, the apparatus 200 may group seasonal diesels of different time periods under a first diesel final product and group marine diesels under a second diesel group that is different from the first diesel final product.

Each visualization associated with a final product includes a minimum and a maximum amount. In some embodiments, the minimum amount for a final product is generated corresponding to an amount of confirmed final product. Such confirmed final product may correspond to how much of the final product (e.g., how much of the individual product grades thereof) has already been purchased by customers of the processing plant, for example. In some embodiments, the maximum amount for a final product is determined via the long-horizon optimization process. In this regard, in some embodiments, the maximum amount represents a minimum amount plus a delta amount, where the delta amount is generated via the long-horizon optimization process to optimize one or more target parameter(s). For example, in some embodiments, the long-horizon optimization process maximizes the profitability of the processing plant.

Each target amount for a final product may represent multiple demands and/or product deliveries. For example, if the target amount for the first final product represents is 10,000 barrels, it may represent a demand and/or delivery of 5000 barrels of the first final product to a first customer at a first time during the time interval, a demand and/or delivery of 3000 barrels of the first final product to a second customer at a second time during the time interval, and a demand or delivery of 2,000 barrels of the first final product to a third customer at a third time during the time interval. Alternatively or additionally, each individual target amount for a product grade in the group of product grades represented by a final product may represent multiple demands and/or product deliveries. For example, continuation with the same example as above, the 10,000 barrels represented by the target amount for the first final product may represent a demand and/or delivery of 5000 barrels of a first product grade of the first final product to a first customer at a first time during the time interval, a demand and/or delivery of 3000 barrels of a second product grade of the first final product to a second customer at a second time during the time interval, and a demand and/or delivery of 2,000 barrels of a third product grade of the first final product to a third customer at a third time during the time interval.

As illustrated, the visualization of the long-horizon optimized plan 504 indicates that more of the first final product is to be generated with a much greater volume than the other final products, followed by the fourth final product with the next-highest volume, followed by the third final product with the next-highest volume, and finally the second final product with the lowest volume to be produced. Additionally, the long-horizon optimized plan may indicate that more of a first product grade of the first final product is to be generated with a much greater volume than other product grades of the first final product, followed by a second product grade of the first final product with the next-highest volume, and/or the like. Based on the long-horizon optimized plan visualized in 504, the processing plant may then be operated to meet the target amounts for each of the final products over a particular time horizon, for example represented by the timestamp interval for which the long-horizon optimized plan was generated (e.g., over m-days).

In this regard, as illustrated the long-horizon optimized plan visualized in 504 represents an optimization of target parameter(s) over a longer time horizon. The short-horizon optimization process, alternatively, represents how to optimize the operation of the processing plant in real-time-or in other words as it is currently operating. The visualization of the short-horizon optimized plan 502 thus defines configuration of the processing plant as it operates. For example, as the physical components of the processing plant operate in real-time, the short-horizon optimized plan minimizes the impact to one or more target parameter(s) of disturbances to the processing plant, such as supply/demand fluctuations and/or unit upsets due to other causes. Disturbances may include demand fluctuations, feed supply or intermediate import disturbances, and/or the like, which ideally are maximally absorbed by the product tanks using the dual-horizon optimization described herein.

As illustrated, the visualization of the short-horizon optimized plan 502 depicts the representation of multiple blenders 514. Each final product may be associated with one or more blenders 514 and each blender 514 may associated with one or more product tanks. In some embodiments, a product tank 516 may be used across different final products. For example, a product tank 516 may be rotated for use in receiving and/or holding different final products at different times.

A product tank 516 may be operable in a receiving configuration corresponding to a receiving state or a holding configuration corresponding to a holding state. A product tank 516 may operate in a receiving configuration during a particular time period in which the product tank 516 is connected to a blender for receiving output of the blender. A product tank may operate in a holding configuration during a particular time period in which the product tank is not connected to a blender, and thus not receiving blender output. In this regard, a particular product tank may represent a receiving tank during a first time period and represent an holding tank during a second time period. In some embodiments, the properties of a receiving tank (e.g., a product tank operating in a receiving configuration) may be continuously controlled to optimize one or more target parameters, as described above. In some examples, the optimizing of the one or more target parameter may start from a heel (e.g., left over from previous operation). In some examples, as described above the target parameter includes plantwide profit, such that optimizing the one or more parameters comprises maximizing plantwide profit.

In some embodiments, the receiving tank properties may be controlled at a user-specified target volume corresponding to the predefined target amount. In this regard, in some embodiments, the predefined target amount may be user-configurable. In some embodiments, at the user-specified target volume, the properties of the inventory within the receiving tank may be selected to satisfy both product specifications associated with a product grade and plantwide optimization steady-state targets. In some embodiments, the user-specified target volume may not be a hard control limit and may be set below the physical capacity of the receiving tank.

It should be appreciated that the long-horizon optimized plan guides the short-horizon optimized plan. In some embodiments for example, the long-horizon optimized plan optimally balances supply and demand to maximize profitability and/or otherwise optimize other target parameter(s), while the short-horizon optimized plan minimizes the impact of disturbances on such an optimized plan. In this regard, the dual-horizon optimization process utilizes both the long-horizon optimization and subsequent short-horizon optimization to both optimize the long-term (e.g., m-day) operation of the processing plant and corresponding short-term operation (e.g., real-time or right now) operation of the processing plant to meet or most closely reach the long-term plan.

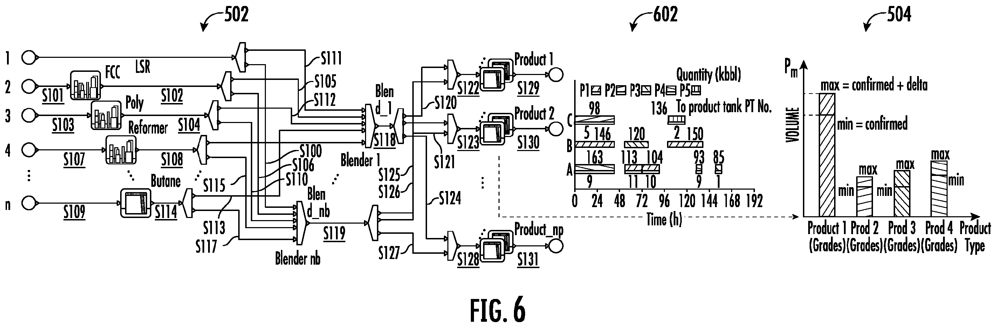

In some example implementations, a feasibility constraint may be applied to the dual-horizon optimization process. For example, in such some example implementations, the number of concurrent product groups (or types) may not be greater than the number of active physical blenders associated with the processing plant. In this regard, in some example implementations, the apparatus 200 may determine whether the number of concurrent products indicated in the long-horizon optimized plan exceeds the number of active physical blenders prior to performing the short-horizon optimization process. In some example implementations, the short-horizon optimization process may be selected or configured based at least in part on a comparison between the number of concurrent products and the number of active physical blenders. FIG. 6 illustrates an example visualization of a lift schedule generation process in accordance with at least an example embodiment of the present disclosure. Specifically, FIG. 6 illustrates visualization of lift schedule generation based at least in part on a long-horizon optimized plan 504 and a short-horizon optimized plan 502. In this regard, it will be appreciated that lift scheduling may be performed autonomously or initiated by a user (e.g., a scheduler) associated with the processing plant. In some examples, the scheduler may be tasked with generating and/or otherwise planning lifts arranged in a schedule, for example to different time slices within which a customer is to obtain a particular final product from the processing plant.

FIG. 6, depicts a visualization of a lift schedule 602 along with a representation of a short-horizon optimized plan 502 and representation of a long-horizon optimized plan 504. In some embodiments, the lift schedule 602 is generated based at least in part on the dual-horizon optimization process. For example, the lift schedule 602 may be generated based on the long-horizon optimized plan and the short-horizon optimized plan generated via the dual-horizon optimization process. The short-horizon optimized plan and the long-horizon optimized plan may both inform the lift scheduling generation process in different ways. For example, the lift schedule 602 may be generated based on the predicted available inventories of final productions in product tanks (e.g., holding tanks), for example as defined by the configuration of the processing plant, short-horizon optimized plan, and/or long-horizon optimized plan. For example, the lift schedule 602 may be generated based on the current availability of inventories of final products in the product tanks, for example as defined by the configuration of the processing plant, short-horizon optimized plan, and/or the like and/or based on the predicted future availability of inventories of final products in the product tanks, for example as defined by the configuration of the processing plant, short-horizon optimized plan, and/or long-horizon optimized plan. In this regard, the lift schedule 602 may be generated to arrange lifts of particular amounts of final products at particular time slices such that no product tank overflows and/or underflows based on the current and future operation of the processing plant, as defined based at least in part on the short-horizon optimized plan and/or long-horizon optimized plan.

In some circumstances, lift scheduling is performed in this manner only in particular circumstances. For example, in some embodiments, lift scheduling based on current inventories and/or future inventories is utilized in a circumstance where the processing plant includes a number of blenders that is greater than or equal to a number of concurrent products at a given time. In some embodiments, a scheduler utilizes one or more user interface(s) that indicate or otherwise depict the available inventories of final product(s) in the actual product tank(s) of a processing plant to generate the lift schedule 602, for example via a user interface depicting at least the product tanks of the flow sheet model 300 as depicted and described herein. It will be appreciated that a scheduler may generate and/or arrange the lift schedule 602 using any of a myriad of known mechanisms, interfaces, and/or the like. In this regard, a user embodying a scheduler may utilize any of such known lift scheduling mechanism(s) to generate the lift schedule based on the available and/or future inventories as described herein.

Techniques described herein enables decoupling of the lift schedule 602 from plant economics, and may be made readily feasible. In some embodiments, otherwise, the lift schedule 602 may be made feasible through remedial adjustments. For example, in some embodiments, remedial adjustments may include delaying or advancing a lifting start time to avoid insufficient or excessive inventories in one or more product tanks. In this regard, if a lift schedule indicates that a particular lift would result in insufficient inventory in a product tank, the lifting start time may be delayed to allow additional inventory to accumulate. Conversely, if a lift schedule indicates that a particular lift would result in excessive inventory in a product tank, the lifting start time may be advanced to reduce the inventory level. Such remedial adjustments may be performed automatically or may be initiated by a user.

In some embodiments, the lift schedule 602 is decoupled from plant economics such that lift scheduling is reduced to a task of picking up products when they are available in holding tanks. In some embodiments, the apparatus 200 asynchronously tracks inventory consumption in holding tanks based on real-time product lifting flow rates, and any discrepancies may be compensated by adjusting future product production. In some embodiments, discrepancies arising from post-blending operations or other factors are identified by comparing expected inventory levels with actual inventory levels determined from the real-time product lifting flow rates, and the apparatus may compensate for such discrepancies by adjusting target production amounts for future optimization iterations.

In some embodiments, the apparatus 200 asynchronously tracks inventory consumption in holding tanks based on real-time product lifting flow rates. For example, as products are lifted from holding tanks for delivery to customers, the apparatus 200 may monitor the lifting flow rates in real-time and update inventory levels accordingly. In some embodiments, the asynchronous inventory tracking tracks and updates lifted products, as opposed to spent components, which enables the system to maintain accurate records of product inventories independently of component-level tracking. In some embodiments, discrepancies between expected and actual inventory levels may arise due to post-blending operations or other factors. In such cases, the apparatus 200 may compensate for these discrepancies by adjusting future product production. For example, if a discrepancy is detected indicating that more product was consumed than expected, the apparatus 200 may increase future production targets to compensate.

In some embodiments, the asynchronous inventory updating capability supports rolling products in or out of the aggregated m-day demands represented in the long-horizon optimized plan. For example, as inventory is consumed and new orders are received, the apparatus 200 may update the demand bars associated with final products to reflect current demand levels. In some embodiments, the asynchronous nature of the inventory tracking enables the lift scheduling to be decoupled from plant economics, such that the lift schedule can be generated based on product availability in holding tanks without requiring real-time optimization of plant operations for each lift event.

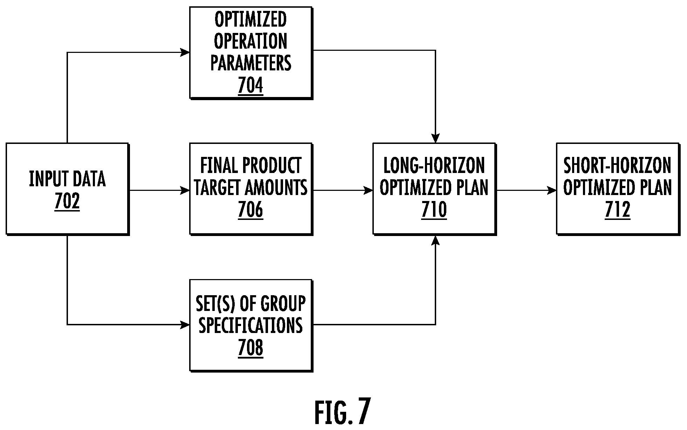

FIG. 7 illustrates an example data flow for dual-horizon optimization in accordance with at least an example embodiment of the present disclosure. Specifically, the data flow represents a dual-horizon optimization process that may be performed for planning plantwide optimization of a particular processing plant to optimize particular target parameter(s). In some embodiments, the apparatus 200 performs such a data flow via a computing environment maintained by the apparatus 200 alone or in conjunction with one or more external system(s), for example a processing plant system.

The data flow begins with input data 702. The input data 702 is processed via a long-horizon optimization process. In some embodiments, the long-horizon optimization process generates a long-horizon optimized plan 710. The long-horizon optimization process in some embodiments is performed as described herein, for example with respect to FIGS. 5A and 5B.

In some embodiments, the long-horizon optimized plan 710 is utilized as input to the short-horizon optimization process. The short-horizon optimization process generates a short-horizon optimized plan 712. The short-horizon optimized plan 712 in some embodiments includes optimized operational parameter(s) for real-time operation of the processing plant. For example, in some embodiments, the short-horizon optimized plan 712 includes optimized operational parameter(s) that represent ideal-resting values, anchor points, or other configurations for one or more physical component(s) of the processing plant. Additionally or alternatively, in some embodiments, the short-horizon optimized plan 712 includes target amounts of final product(s) to be produced by the processing plant in real-time.

The short-horizon optimization process represents a particular process including one or more determination(s), transformation(s), and/or other data-driven action(s) that are performed for a particular processing plant to generate the short-horizon optimized plan 712. In some embodiments, the short-horizon optimization process includes a specific process for setting blender outlet target flowrate(s), generating a lift schedule, setting ideal resting value(s) for one or more physical component(s), setting other configuration(s) of physical component(s) of the processing plant, and/or the like. In some embodiments, the particular short-horizon optimization process as applied is based at least in part on the processing plant itself, for example the physical component(s) of the processing plant, configuration(s) of such physical component(s), determination(s) associated therewith, and/or the like, as described herein.

In some embodiments, the input data 702 represents a representation of a processing plant, configuration of the processing plant, confirmed demand for final product(s), a timestamp interval for optimization, data associated with input product(s) and/or final product(s), and/or other data that may be utilized during the dual-horizon optimization process. In some embodiments, the input data 702 includes determination(s) regarding the physical layout of the processing plant.

In some embodiments, the long-horizon optimized plan 710 includes optimized operational parameter(s) associated with a particular timestamp interval, for example m-days. In some such embodiments, the long-horizon optimized plan 710 includes target amounts for final product(s) to be produced by the processing plant over the timestamp interval to optimize a particular target parameter, for example to maximize profitability. In some embodiments, the long-horizon optimized plan 710 includes or is associated with one or more sets of group specifications for each final product (e.g., for each group of product grades thereof) over the timestamp interval to optimize a particular target parameter. In this regard, in such some embodiments, generating the long-horizon optimized plan 710 comprises generating optimized operation parameters 704, final product target amounts 706, and/or group specifications 708. In some embodiments, the apparatus 200 generates the optimized operation parameters 704, the final product target amounts 706, the group specifications 708, and/or the long-horizon optimized plan 710 based at least in part on the input data 702.

In some embodiments, generating the final product target amounts 706 comprises generating target amounts for individual product grades associated with a final product. For example, as described above, the final product target amount 706 for a final product may reflect or otherwise is based on the target amounts of individual product grades associated with the final product. Alternatively or additionally, in some embodiments, generating the final product target amounts 706 comprises defining the product grade group associated with a respective final product as described herein.

In some embodiments, the set of group specifications for a final product comprises a group specification for each product parameter from a set of product parameters for the final product. One non-limiting example of such product parameter is vapor pressure. In some embodiments, the apparatus 200 is configured to generate one or more sets of group specification for a final product over the time interval and for one or more optimization iterations. For example, the apparatus 200 may generate one or more sets of group specifications for a particular final product over the time interval, wherein each set of group specification may be associated with a particular optimization iteration.

In some embodiments apparatus 200 determines a set of group specifications for a final product based on a set of product parameter specifications for the product grades in the group of product grades represented by the final product. Each set of product parameter specifications for a product grade may comprise a lower specification limit and/or a upper specification limit for one or more product parameters associated with the final product. The product parameter specification may be different for the different product grades in the group of product grades.

In some embodiments, the apparatus 200 leverages one or more models to determine the set of group specifications for a final product. In some embodiments, each of the one or more models may be associated with a tuning parameter value (also referred to herein as tunable parameter value). The tuning parameter value may be representative and/or indicative of a safety margin associated with the respective model. In some embodiments, the tuning parameter defines a range of 0-1.

In some embodiments, the apparatus 200 selects a model from the one or more models and applies the selected model to the set of product parameter specifications for the group of product grades to determine the set of group specification. In some embodiments, the one or more models comprise a conservative model, average-based model, or greedy model. In some embodiments, the conservative model is associated with a tuning parameter value of 1 corresponding to 100% safety margin, the average-based model is associated with a tuning parameter value of 0.5 corresponding to 50% safety margin, and the greedy model is associated with a tuning parameter (tunable parameter) of 0 corresponding to a safety margin of 0%.

In some embodiments, when the tunable parameter value is between the values associated with two of the one or more models, the apparatus 200 may interpolate between the two models to determine the set of group specifications. For example, when the tunable parameter value is greater than 0.5 and less than 1, the apparatus 200 may interpolate between the conservative model and the average-based model to determine the group specification. As another example, when the tunable parameter value is greater than 0 and less than 0.5, the apparatus 200 may interpolate between the average-based model and the greedy model to determine the group specification. In some embodiments, the interpolation may be performed using linear interpolation based on the tunable parameter value.

In some embodiments, the conservative model may be represented as illustrated in equation 2 below. $\begin{matrix}group _ low _ spec = {max}_{i ∈ \left\{group\right\}} \left\{grade\left(i\right).lo_spec\right\} ; \\ group _ hi _ spec = {min}_{i ∈ \left\{group\right\}} \left\{grade\left(i\right).hi_spec\right\}\end{matrix}$ Equation 2

Where *group_low_spec* may represent the group lower specification limit for final product, grade(i). *lo_spec* may represent a set of individual lower specification limits comprising the individual lower specification limit for each i^{th} product grade of the final product, ${max}_{i ∈ \left\{group\right\}} \left\{grade\left(i\right).lo_spec\right\}$ may represent the maximum value from the individual lower specification limits of the product grades associated with the final product, *group_hi_spec* may represent the group upper specification limit for the final product, grade(i). *hi_spec* may represent a set of individual upper specification limits comprising the individual upper specification limit for each i^{th} product grade of the final product, and ${min}_{i ∈ \left\{group\right\}} \left\{grade\left(i\right).hi_spec\right\}$ may represent the minimum value from the set of individual upper specification limits.

In some embodiments, the average-based model may be represented as illustrated in equation 3 below. $\begin{matrix}avg _ lo _ spec = {volume _ mean}_{i ∈ \left\{group\right\}} \left\{grade\left(i\right).lo_spec\right\} ; \\ avg _ hi _ spec = {volume _ mean}_{i ∈ \left\{group\right\}} \left\{grade\left(i\right).hi_spec\right\} \\ {volume _ mean \left(x\right)}_{i ∈ \left\{group\right\}} = \frac{\sum {x}_{i} {v}_{i}}{\sum {v}_{i}}\end{matrix}$ Equation 3

Where *avg_lo_spec* may represent the group lower specification limit for the final product, grade(i). *lo_spec* may represent a set of individual lower specification limits comprising the individual lower specification limit for each i^{th} product grade of the final product, volume_mean{grade(i). *hi_spec}* may represent the volume mean of the set of individual lower specification limits, *avg_hi_spec* may represent the group upper specification limit, grade(i). *hi_spec* may represent a set of individual upper specification limits comprising the individual upper specification limit for each i^{th} product grade of the final product, and ${volume _ mean}_{i ∈ \left\{group\right\}} \left\{grade\left(i\right).hi_spec\right\}$ may represent the volume mean of the set of individual upper specification limits.

In some embodiments, the greedy model may be represented as illustrated in equation 4 below. $\begin{matrix}greedy _ low _ spec = {min}_{i ∈ \left\{group\right\}} \left\{grade\left(i\right).lo_spec\right\} ; \\ greedy _ hi _ spec = {max}_{i ∈ \left\{group\right\}} \left\{grade\left(i\right).hi_spec\right\}\end{matrix}$ Equation 4

Where *greedy_low_spec* may represent the group lower specification limit for final product, grade(i). *lo_spec* may represent a set of individual lower specification limits comprising the individual lower specification limit for each i^{th} product grade of the final product, ${min}_{i ∈ \left\{group\right\}} \left\{grade\left(i\right).lo_spec\right\}$ may represent the minimum value from the individual lower specification limits of the product grades associated with the final product *greedy_hi_spec* may represent the group upper specification limit for the final product, grade(i). *hi_spec* may represent a set of individual upper specification limits comprising the individual upper specification limit for each i^{th} product grade of the final product, and ${max}_{i ∈ \left\{group\right\}} \left\{grade\left(i\right).hi_spec\right\}$ may represent the maximum value from the set of individual upper specification limits.

By way of example, if a tuning parameter of 1 is selected, the apparatus 200 may leveraged the conservative model to generate a group specification for a product parameter associated with the group of product grades corresponding to the final product. In this regard, the group specification for the product parameter may comprise the specification of the product parameter for a first product grade. For example, the apparatus 200 may determine the group specification for the final product to be the specification for a first product grade and leverage the group specification in an optimization iteration. The apparatus 200 may cause adjustment of one or more properties of one or more blenders based on the group specification(s). The final product (e.g., having the group specification corresponding to the first product grade) is then output to the receiving tank (e.g., run down to the receiving tank) until the amount of the final product (e.g., first product grade thereof) in the receiving tank is greater than or equal to the target amount for the first product grade (plus a safety volume margin in some embodiments).

In some embodiments, in response to the inventory within the receiving tank satisfying a predefined target amount, the receiving tank transitions to a holding tank. For example, in some embodiments, in response to the inventory within the receiving tank satisfying a predefined target amount, the apparatus 200 causes the receiving tank to transition to a holding tank. In this regard, the apparatus 200 may cause the receiving tank not to be linked to a blender such that the receiving tank stops receiving products output by a blender. In other words, a product tank may be caused to transition from a receiving configuration to a holding configuration when a predefined target amount is achieved in the receiving tank.

In some embodiments, the predefined target amount is the target amount of a particular product grade. In this regard, the apparatus 200 may cause a product tank to transition from a receiving configuration in which it is connected to a blender to a holding configuration in which it is not connected to a blender in response to determining that the product tank includes a target amount (e.g., target inventory amount) of a particular product grade.

In some embodiments, the inventory associated with the holding tank is assigned a "ready" status (e.g., indicator, classification, flag, label, and/or the like) in response to satisfaction of set of conditions such as, for example, satisfaction of a set of test results. For example, the ready status, may indicate that the inventory associated with the holding tank may be used at subsequent operating steps (e.g., lifting, post blending, and/or the like) if results of testing performed on the inventory is satisfactory. In some embodiments, the apparatus 200 may be configured cause performance of the testing or other evaluation of the inventory.

In some embodiments, the inventory of a holding tank associated with a ready status is assigned to a set of demands reflected in the long-horizon optimized plan based on a configurable set of predefined sequential rules. For example, in some embodiments, the apparatus 200 causes the inventory of a holding tank associated with a ready status to be assigned to a set of demands reflected in the long-horizon based on a configurable set of predefined sequential rules. In some embodiments, the set of demands comprises one or more confirmed demands for the product grade corresponding to the inventory. In some embodiments, the set of predefined rules comprises a first rule indicative and/or representative of a first in (order placing time), first designated to be delivered and a second rule indicative and/or representative of earliest expected delivery data. In some embodiments, the order of the rules within the set of predefined rules may be switched if the inventory allows.

As illustrated, the target amount of the final product associated with the set of demands is adjusted by removing a portion corresponding to the set of demands. For example, as illustrated a representation of the target amount corresponding to the set of demands may be subtracted or otherwise removed from the demand bar corresponding to the final product. In this regard, in some embodiments, the long-horizon optimized plan 710 is associated with a remainder target amount (e.g., remaining demand volume) corresponding to a final product in response to a receiving tank satisfying the predefined target amount corresponding to a product grade. For example, the remainder target amount may correspond to a portion of the group of product grades for the final product not satisfied by the inventory from the receiving tank. In this regard, in some embodiments, the remainder target amount may be associated with fewer number of product grades relative to the initial number of product grades defined by the group of product grades associated with the final product.

In some embodiments, the remainder target amount is used for a subsequent optimization iteration (e.g., subsequent long-horizon optimization). In this regard, in some embodiments, the apparatus 200 determines a second set of group specifications for the remainder target amount or otherwise the remainder product grades based on the set of product parameters specifications associated with the remainder product grades corresponding to the remainder target amount and using a mode, from the one or more models, corresponding to a selected tuning parameter as described above.

In this regard, in some embodiments, the conservative model for generating the group specification for remainder product grades associated with a final product may be represented as illustrated in equation 5 below. $\begin{matrix}group _ low _ spec = {max}_{i ∈ \left\{Regroup\right\}} \left\{grade\left(i\right).lo_spec\right\} ; \\ group _ hi _ spec = {min}_{i ∈ \left\{Regroup\right\}} \left\{grade\left(i\right).hi_spec\right\}\end{matrix}$ Equation 5

Where *group_low_spec* may represent the group lower specification limit for the remainder product grades associated with the final product, grade(i). *lo_spec* may represent a set of individual lower specification limits comprising the individual lower specification limit for each i^{th} product grade of the remainder product grades, ${max}_{i ∈ \left\{Regroup\right\}} \left\{grade\left(i\right).lo_spec\right\}$ may represent the maximum value from the individual lower specification limits of the remainder product grades associated with the final product, *group_hi_spec* may represent the group upper specification limit for the remainder product grades associated with the final product, grade(i). *hi_spec* may represent a set of individual upper specification limits comprising the individual upper specification limit for each i^{th} product grade of the remainder product grades associated with the final product, and ${min}_{i ∈ \left\{Regroup\right\}} \left\{grade\left(i\right).hi_spec\right\}$ may represent the minimum value from the set of individual upper specification limits.

In some embodiments, the average-based model for generating group specifications for remainder product grades associated with a final product may be represented as illustrated in equation 6 below. $\begin{matrix}avg _ lo _ spec = {volume _ mean}_{i ∈ \left\{Regroup\right\}} \left\{grade\left(i\right).lo_spec\right\} ; \\ avg _ hi _ spec = {volume _ mean}_{i ∈ \left\{Regroup\right\}} \left\{grade\left(i\right).hi_spec\right\} \\ {volume _ mean \left(x\right)}_{i ∈ \left\{Regroup\right\}} = \frac{\sum {x}_{i} {v}_{i}}{{v}_{i}}\end{matrix}$ Eqaution 6

Where *avg_lo_spec* may represent the group lower specification limit for the remainder product grades associated with the final product, grade(i). *lo_spec* may represent a set of individual lower specification limits comprising the individual lower specification limit for each i^{th} product grade of the remainder product grades associated with the final product, ${volume _ mean}_{i ∈ \left\{Regroup\right\}} \left\{grade\left(i\right).hi_spec\right\}$ may represent the volume mean of the set of individual lower specification limits, *avg_hi_spec* may represent the group upper specification limit, grade(i). *hi_spec* may represent a set of individual upper specification limits comprising the individual upper specification limit for each i^{th} product grade of the remainder product grades associated with the final product, and ${volume _ mean}_{i ∈ \left\{Regroup\right\}} \left\{grade\left(i\right).hi_spec\right\}$ may represent the volume mean of the set of individual upper specification limits.

In some embodiments, the greedy model for generating group specification for remainder product grades associated with a final product may be represented as illustrated in equation 7 below. $\begin{matrix}greedy _ low _ spec = {min}_{i ∈ \left\{Regroup\right\}} \left\{grade\left(i\right).lo_spec\right\} ; \\ greedy _ hi _ spec = {max}_{i ∈ \left\{Regroup\right\}} \left\{grade\left(i\right).hi_spec\right\}\end{matrix}$ Equation 7

Where *greedy_low_spec* may represent the group lower specification limit for the remainder product grades associated with the final product, grade(i). *lo_spec* may represent a set of individual lower specification limits comprising the individual lower specification limit for each i^{th} product grade of the remainder product grades associated with the final product, ${min}_{i ∈ \left\{Regroup\right\}} \left\{grade\left(i\right).lo_spec\right\}$ may represent the minimum value from the individual lower specification limits of the product grades associated with the final product *greedy_hi_spec* may represent the group upper specification limit for the remainder group grades associated with the final product, grade(i). *hi_spec* may represent a set of individual upper specification limits comprising the individual upper specification limit for each i^{th} product grade of the remainder group grades associated with the final product, and ${max}_{i ∈ \left\{Regroup\right\}} \left\{grade\left(i\right).hi_spec\right\}$ may represent the maximum value from the set of individual upper specification limits.

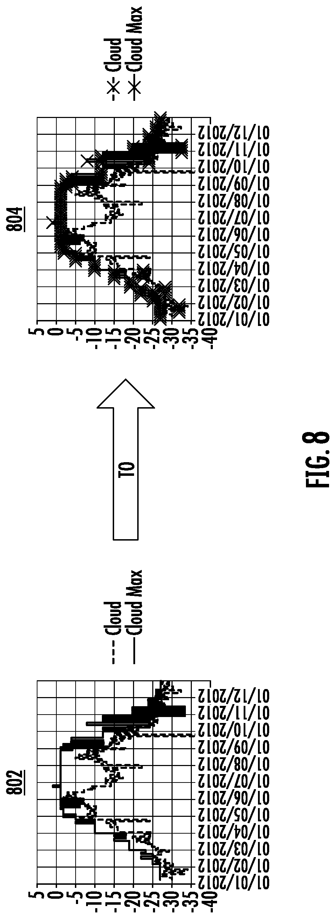

FIG. 8 illustrates example representation of inventory associated with a final product in accordance with at least one example embodiment of the present disclosure. In particular, FIG. 8 illustrates visualization of an example minimization of giveaway in shoulder seasons in accordance with at least one example embodiment. In some embodiments, minimization of giveaway is achieved by executing a shoulder season specification (spec) ramp-up process or shoulder season spec ramp-down process in accordance with at least one example embodiment of the present disclosure.

In the example depicted in FIG. 8, the representation 804 may reflect minimization of giveaway relative to the representation 802, wherein the representation 804 illustrates a result of the shoulder season specification (spec) ramp-up process or shoulder season spec ramp-down process. Each representation comprises a plot of cloud point versus cloud point maximum for illustrating the giveaway. In some embodiments, the cloud point represents a product parameter associated with a product, such as diesel or other distillate products. The representation 802 may illustrate a baseline scenario without optimized group specification management, wherein the cloud point values may exhibit greater deviation from the cloud point maximum specification limits, resulting in increased product giveaway. In contrast, the representation 804 may illustrate the result of applying the shoulder season spec ramp-up process or shoulder season spec ramp-down process as described herein, wherein the cloud point values are controlled more closely to the cloud point maximum specification limits, thereby minimizing unnecessary quality giveaway while still satisfying product specifications. In some embodiments, the minimization of giveaway is achieved by dynamically adjusting the group specifications based on the tunable parameter value and the selected model (e.g., conservative model, average-based model, or greedy model) as product grades transition during shoulder seasons. The visualization in FIG. 8 demonstrates that by managing the transition between concurrent product grades using the techniques described herein, the apparatus 200 can reduce the margin between actual product properties and specification limits, thereby capturing additional economic value that would otherwise be lost through excessive quality giveaway.

Shoulder seasons may involve two or more concurrent grades in the product demand. By way of non-limiting example, shoulder seasons may involve two concurrent grades-comprising a first product grade and a second product grade, or a second product grade and a third product grade-in the product demand. In some embodiments, the apparatus 200 may be configured to manage seasonal grade transitions (e.g., manage transitions between seasonal product grades) during shoulder seasons by executing a shoulder season spec ramp-up process or shoulder season spec ramp-down process.

In some embodiments, a shoulder season spec ramp-up process using a safety margin of 100% may comprise at a step one, setting the tunable parameter to 1, wherein the apparatus 200 calculates the group specifications to be equal to the first product grade specifications (e.g., group specifications = first product grade specifications), which is then used in the PWO optimization and set on the blender (e.g., blend header). The shoulder season spec ramp-up process may comprise at a step two, running down the product to a first product tank (operating as a first receiving tank) until the volume in the first product tank is greater than or equal to the first product grade target volume plus a safety volume margin. The shoulder season spec ramp-up process may comprise at a step three, switching to a second receiving tank, and assigning the first product tank a ready status or an earmarked status. The shoulder season spec ramp-up process may comprise at a step four, subtracting the first product grade volume from the product demand which may be represented as a demand bar comprising the different product grades. The shoulder season spec ramp-up process may comprise, at a step five, setting the group specifications to the second product grade specification in the PWO and blender, and running down the product to the second receiving tank. In some embodiments, the shoulder season spec ramp-up process comprises repeating the steps thereof, in response to completion of the second product grade volume (plus a volume margin in some embodiments).

In some embodiments, the shoulder season spec ramp-down process may comprise at a step one setting the tunable parameter to 0 and setting the group specifications to the first product grade specifications in the PWO and on the blender. The shoulder season spec ramp-down process may comprise at a step two, running down the product to a first product tank (operating as a receiving tank) until its volume is greater than or equal to the first product grade orders (e.g., first product grade demand) plus a safety margin based on the tunable parameter set at step one. The shoulder season spec ramp-down process may comprise at a step three, switching to a second receiving tank, and setting the group specifications to the second product grade specification in the PWO and blender. In some embodiments, the shoulder season spec ramp-down process comprises repeating the steps thereof, when a subsequent grade (such as a third grade) comes into the product demand.

In some other embodiments, the group specifications may be set to a leading specification (e.g., group specification = leading specification) for both seasons. For example, in some embodiments, an alternative to using different tunable parameter values for ramp-up or ramp-down seasons may comprise setting the group specification to a leading specification as the tuning method for both seasons. In some embodiments, the leading specification may represent the specification associated with the product grade that is being phased in during a seasonal transition.

In some embodiments, a shoulder season spec ramp-up operation using a leading specification approach may comprise setting the group specification to the leading specification, wherein the apparatus 200 calculates the group specification to be equal to the first product grade specifications, which is used in PWO optimization and set on the blender; running down the product to a first product tank (operating as a receiving tank) until its volume is greater than or equal to the first product grade target volume plus a safety volume margin; switching to another receiving tank and assigning the first product tank a ready status or an earmarked status; subtracting the first product grade volume from the product demand; setting the group specifications to the second product grade specifications in the PWO and running down the product to a second receiving tank; and repeating the steps thereof in response to completion of the second product grade volume (plus a volume margin).

In some embodiments, a shoulder season spec ramp-down process using a leading specification approach may comprise setting the group specification to the leading specification and setting the group specifications to be equal to the first product grade specifications in the PWO and on the blender; running down the product to a first product tank (operating as a receiving tank) until its volume is greater than or equal to the first product grade orders plus a safety margin; switching to another receiving tank and setting the group specifications equal to the second product grade specifications in the PWO and on the blender; and repeating the procedure when a subsequent grade (such as a third grade) comes into the product demand.

In some embodiments, for small-volume products, a single product tank may be utilized, wherein the apparatus 200 manages specification stepping during shoulder seasons. The shoulder season spec ramp-up process, shoulder season spec ramp-down process, and/or the tunable parameter may be automated in the PWO.

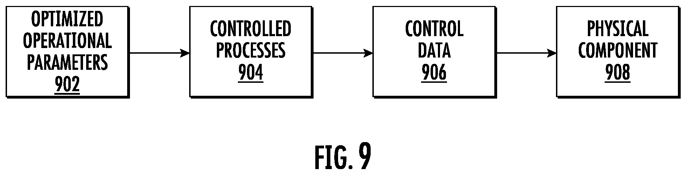

FIG. 9 illustrates a data flow for configuring operation of a physical component in accordance with at least one example embodiment of the present disclosure. In some embodiments, the configured operation of the physical component causes operation of the physical component in accordance with a particular operation, for example to operate the physical component in a manner that optimizes one or more target parameter(s) as indicated by one or more optimized operational parameter(s). The optimized operational parameter(s) may be generated via the dual-horizon optimization process(es) described herein.

As illustrated, optimized operational parameter(s) 902 are utilized or otherwise applied to one or more control process(es) 904. In some embodiments, the optimized operational parameter(s) 902 includes at least one optimized operational parameter determined via one or more dual-horizon optimization process(es). In some embodiments, the optimized operational parameter(s) 902 represent optimized amounts of a plurality of final products to be produced via a processing plant over a particular timestamp interval to maximize one or more target parameter(s). The optimized operational parameter(s) 902 may be generated by, stored to, and/or otherwise maintained by the apparatus 200. In some embodiments, the optimized operational parameter(s) 902 include target amounts for final products determined via the long-horizon optimization process, wherein each target amount for a particular final product reflects individual target amounts for the product grades in the group of product grades associated with the particular final product. Additionally or alternatively, in some embodiments, the optimized operational parameter(s) 902 include one or more sets of group specifications for final products, wherein each set of group specifications is generated based on a model selected from one or more models (e.g., a conservative model, an average-based model, or a greedy model) as described herein. In some embodiments, the optimized operational parameter(s) 902 include flowrate parameters for one or more blenders, ideal resting values for one or more physical components, and/or other configurations determined via the short-horizon optimization process based at least in part on the long-horizon optimized plan.

The control process(es) 904 embody, include, or otherwise initiate particular process(es) for controlling operation of a particular physical component or a plurality of physical components. In some embodiments, the control process(es) 904 generates particular control data 906 that causes a physical component to operate in a particular manner defined by the control data 906. For example, in some embodiments, a user inputs data via the control process(es) 904 that indicates a configurable mode to be activated on a particular physical component, causing the physical component to operate in accordance with the selected mode. In one example context, a user may provide particular user input that initiates the control process(es) 904, which generates control data 906 that configures a physical component to perform in accordance with a selected mode to generate a particular final product during a particular time slice. In some embodiments, the control process(es) 904 are initiated via a particular user-facing interface associated with the processing plant. In some embodiments, the user-facing interface is generated by the apparatus 200 based at least in part on external representation(s) corresponding to the processing plant.

In some embodiments, the control process(es) 904 include processes for causing a product tank to transition from a receiving configuration to a holding configuration in response to determining that inventory within the product tank is associated with a predefined target amount corresponding to a product grade. In some embodiments, the control process(es) 904 include processes for connecting one or more blenders to a different product tank after a product tank transitions to a holding configuration, thereby enabling continued production of final products in accordance with the long-horizon optimized plan.

As illustrated, the control data 906 is transmitted or otherwise provided to physical component 908. In some embodiments, the control data 906 is transmitted to the physical component 908 to cause the physical component to alter its configuration(s) and/or mode of operation. In this regard, the control data 906 in some embodiments causes operation of the physical component 908 in accordance with a particular selected mode, for example to produce a particular desired final product via one or more downstream and/or upstream physical component(s) to a particular product tank in the context of rundown blending.

In some embodiments, the control data 906 includes data that causes adjustment of one or more properties of one or more blenders based on the set of group specifications generated for a final product. For example, the control data 906 may configure a blender to output final product having specifications corresponding to a first group specification determined using a conservative model, an average-based model, or a greedy model based on a tunable parameter value. In some embodiments, the control data 906 includes data that causes a product tank to transition between a receiving configuration and a holding configuration, wherein the product tank operates in the receiving configuration when connected to a blender for receiving output of the blender and operates in the holding configuration when not connected to a blender.

It should be appreciated that a plurality of physical components may be updated at once. For example, in some embodiments, control data is transmitted and/or otherwise provided to a plurality of physical components embodying different rundown blenders and/or upstream physical component(s) thereof to configure the rundown blenders to produce a particular final product in real-time based on input product(s) received from the upstream component(s). In this regard, the operation of such rundown blenders enables simultaneous real-time production of final products in a manner that optimizes in accordance with the results of the dual-horizon optimization process as performed, for example to optimize in accordance with the optimized operational parameter(s) 902.

In some embodiments, the control data causes operation of the plurality of physical components to produce final products having specifications that satisfy both product specifications associated with product grades and plantwide optimization steady-state targets. In some embodiments, the control data is updated iteratively as inventory is produced and assigned to product demands, wherein the apparatus 200 modifies the long-horizon optimized plan by removing amounts corresponding to inventory within product tanks from target amounts associated with final products and generates updated sets of group specifications for subsequent short-horizon optimization processes based on the modified long-horizon optimized plan. In some embodiments, the apparatus 200 may automatically execute the control process(es) (or portion thereof) based on the control data.

### EXAMPLE METHODS

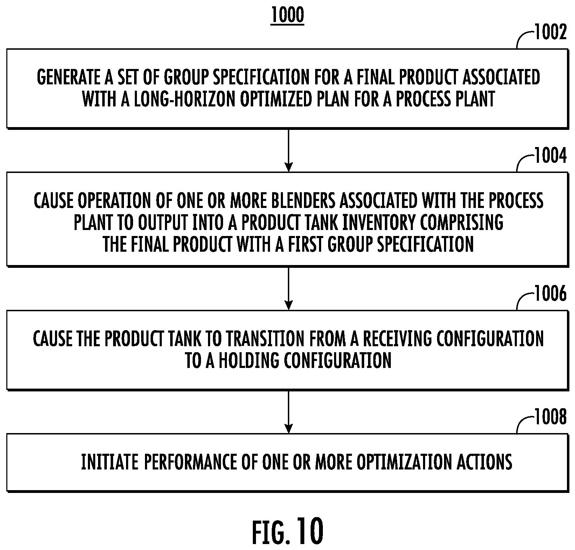

Referring now to FIG. 10, a flowchart providing an example method 1000 is illustrated. In this regard, FIG. 10 illustrates operations that may be performed by the system, master controller 140, the secondary controller 160, the user device 170, the plant 102, apparatus 200, and/or the like. In some embodiments, the method 1000 includes operations for plantwide optimization in accordance with at least some embodiments of the present disclosure. In particular, FIG. 10 illustrates operations for PWO order management in processing plants (process plants) such as rundown blending refineries. In some embodiments, the example method 1000 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 1000.

As shown in block 1002, the method 1000 may comprise generating a set of group specifications for a final product associated with a long-horizon optimized plan for a process plant based on a first model selected from one or more models. In some examples, the set of group specifications may comprise a first group specification for a product parameter associated with the final product. For example, the set of group specifications may comprise one or more specifications, each associated with a particular product parameter. The product parameter may represent a measurable characteristic or property of the final product that is to satisfy certain specification limits to meet product quality requirements. Non-limiting examples of product parameters include vapor pressure, cloud point, cetane number, octane rating, sulfur content, flash point, viscosity, density, distillation characteristics, aromatic content, and other physical or chemical properties relevant to the final product.

In some examples, the final product is associated with a group of product grades of the final product. For example, the final product may represent a group of individual product grades. In some examples, the final product may comprise a particular product grade of the group of product grades. By way of example, a diesel final product may comprise winter diesel, summer diesel, or marine diesel, each having different specification limits for product parameters. As another example, a gasoline final product may comprise regular gasoline, mid-grade gasoline, or premium gasoline, each having different specification limits for product parameters such as octane rating.

In some examples, the first model is selected from the one or more models based on a tunable parameter value associated with the first model. The tunable parameter value may be representative of a safety margin that determines how conservatively or aggressively the group specifications are set relative to the individual product grade specifications. In some examples, the one or more models comprise (i) a conservative model associated with a first tunable parameter value, (ii) an average-based model associated with a second tunable parameter value, and (iii) a greedy model associated with a third tunable parameter value. For example, the conservative model may be associated with a tunable parameter value of 1 corresponding to 100% safety margin, the average-based model may be associated with a tunable parameter value of 0.5 corresponding to 50% safety margin, and the greedy model may be associated with a tunable parameter value of 0 corresponding to 0% safety margin. In some embodiments, when the tunable parameter value falls between the values associated with two models, the apparatus 200 may interpolate between the two models to determine the set of group specifications. For example, when the tunable parameter value is between 0.5 and 1, the apparatus 200 may interpolate between the conservative model and the average-based model.

In some examples, the first model comprises a conservative model, wherein the first group specification comprises one or more of an upper specification limit associated with a first product grade from the group of product grades or a lower specification limit associated with the first product grade from the group of product grades. For example, in some embodiments, when applying the conservative model, the apparatus 200 may determine the group lower specification limit for a product parameter by selecting the maximum value from the individual lower specification limits of the product grades in the group, and may determine the group upper specification limit by selecting the minimum value from the individual upper specification limits of the product grades in the group. This conservative approach ensures that the final product produced using the group specifications will satisfy the specifications for all product grades within the group, thereby minimizing the risk of producing off-specification product.

As shown in block 1004, the method 1000 may comprise causing operation of one or more blenders associated with the process plant to output into a product tank connected to the one or more blenders, inventory comprising the final product with the first group specification. For example, the inventory that is output into the product tank may comprise final product having a specification that corresponds to the set of group specifications generated for the final product using the first model. For example, inventory comprising a final product with a first group specification may comprise a quantity of the final product stored within or received by a product tank, wherein the final product has product parameter values that correspond to the first group specification. In some embodiments, inventory within a product tank may be associated with a particular product grade of a final product based on the specifications of the inventory. For example, if the inventory has product parameter values that satisfy the specifications for a particular product grade, the inventory may be designated as corresponding to that product grade and may be assigned to fulfill demands for that product grade.

In some examples, causing operation of the one or more blenders to output the final product comprises performing a short-horizon optimization process based at least in part on the long-horizon optimized plan to generate at least one optimized operational parameter; and applying the at least one optimized operational parameter to control at least one blender of the one or more blenders. The short-horizon optimization process may generate optimized operational parameters that define real-time operation of the processing plant in a manner that is guided by the long-horizon optimized plan while minimizing the impact of disturbances such as supply fluctuations, demand fluctuations, and unit upsets. In some examples, the at least one optimized operational parameter corresponds to flowrate for at least one blender of the one or more blenders.

For example, the optimized operational parameter may specify a target flowrate at which a blender should output final product to a product tank. Additionally or alternatively, the optimized operational parameter may specify component flowrates, blend ratios, temperature setpoints, pressure setpoints, or other operational parameters that control how the blender processes input products to produce the final product with the desired group specifications. In some embodiments, the short-horizon optimization process continuously adjusts the optimized operational parameters in response to real-time conditions while maintaining alignment with the long-horizon optimized plan to optimize one or more target parameters such as profitability, throughput, or waste minimization.

As shown in block 1006, the method 1000 may comprise, in response to determining that the inventory within the product tank is associated with a predefined target amount, causing the product tank to transition from a receiving configuration to a holding configuration. The predefined target amount may represent a target volume or quantity of final product corresponding to a particular product grade or set of product grades. For example, the predefined target amount may correspond to the target amount for a first product grade as determined by the long-horizon optimized plan, optionally plus a safety volume margin to account for measurement uncertainties or operational variations. In some examples, causing the product tank to transition from the receiving configuration to the holding configuration comprises causing the product tank to be disconnected from the one or more blenders.

For example, when a product tank is operating in a receiving configuration, it is connected to one or more blenders and actively receives output from the blenders. When the product tank transitions to a holding configuration, it is disconnected from the blenders and no longer receives blender output, instead holding the accumulated inventory for subsequent operations such as quality testing, assignment to product demands, or lifting for delivery to customers. In some embodiments, the transition from receiving configuration to holding configuration may be performed automatically by the apparatus 200 in response to determining that the inventory within the product tank has reached the predefined target amount. In some embodiments, the transition may involve physical reconfiguration of valves, piping connections, or other physical components to disconnect the product tank from the blenders.

As shown in block 1008, the method 1000 may comprise initiating performance of one or more optimization actions. The one or more optimization actions may include various operations including, but not limited to, operations that facilitate continued optimization of the processing plant following the transition of a product tank from receiving configuration to holding configuration. In some examples, initiating performance of the one or more optimization actions comprises assigning the inventory to a set of product demands associated with the final product. Assigning the inventory to a set of product demands may involve designating the inventory within the holding tank as allocated to fulfill one or more specific customer orders or anticipated demands for the final product. In some examples, the set of demands comprises a confirmed order (confirmed demand) corresponding to the first product grade. In some embodiments, a confirmed order (confirmed demand) represents a customer purchase commitment for a specific quantity of a product grade.

In some embodiments, product demands may include both confirmed orders representing existing customer commitments and anticipated future demand. For example, confirmed orders may be associated with expected delivery dates and order placing times that inform how inventory is assigned to demands. In some embodiments, the apparatus 200 assigns inventory to product demands based on a configurable set of predefined sequential rules, such as first-in-first-out based on order placing time, earliest expected delivery date, or other prioritization criteria. In some embodiments, a user may manually adjust the assignment of inventory to demands, for example by swapping one order for another if the available inventory volume allows.

In some examples, initiating performance of the one or more optimization actions comprises modifying the long-horizon optimized plan by removing an amount corresponding to inventory within the product tank from a target amount associated with the final product to generate a modified long-horizon optimized plan. In some embodiments, the adjustment of the long-horizon optimized plan to reflect the remainder target amount generates the modified long-horizon optimized plan. In this regard, the modified long-horizon optimized plan may represent the long-horizon optimized plan with the amount corresponding to inventory within the product tank removed from the target amount associated with the final product. For example, if the long-horizon optimized plan originally specified a target amount of 50,000 barrels for a diesel final product comprising multiple product grades, and a product tank has accumulated 15,000 barrels of inventory corresponding to a first product grade, the modified long-horizon optimized plan may specify a remainder target amount of 35,000 barrels for the remaining product grades of the diesel final product. This modification enables the apparatus 200 to iteratively update the optimization process as inventory is produced and assigned to demands, ensuring that subsequent optimization iterations account for the inventory already produced and avoid overproduction or underproduction of final products.

In some examples, initiating the one or more optimization actions further comprises generating a second set of group specifications for a subsequent short-horizon optimization process based on the modified long-horizon optimized plan. The second set of group specifications may be generated using the same or a different model from the one or more models (e.g., conservative model, average-based model, or greedy model) based on a tunable parameter value. In some examples, the second set of group specifications comprises a second group specification for the product parameter associated with the final product. In some examples, the first group specification and the second group specification are different relative to each other.

For example, if the first group specification was generated based on a group of product grades comprising a first product grade, a second product grade, and a third product grade, and the inventory in the product tank corresponds to the first product grade, the second set of group specifications may be generated based on the remaining product grades comprising only the second product grade and the third product grade. As a result, the second group specification for a product parameter may differ from the first group specification because it is based on a different subset of product grades. For example, if the first group specification for a product parameter (based on the maximum lower specification limit among all three product grades), the second group specification for cloud point might be -5°C (based on the maximum lower specification limit among only the second and third product grades). This dynamic adjustment of group specifications enables the apparatus 200 to optimize production for the remaining product grades without being constrained by specifications for product grades that have already been produced.

In this regard, in some embodiments, after generating the second set of group specifications, a subsequent short-horizon optimization process may be performed using the second set of group specifications. The subsequent short-horizon optimization process may be guided by the modified long-horizon optimized plan and may utilize the second set of group specifications to control real-time operation of the processing plant for producing remainder product grades. For example, initiating performance of the one or more optimization actions may comprise causing operation of one or more blenders to output final product having specifications corresponding to the second set of group specifications into a product tank, thereby continuing the optimization cycle for the remainder product grades associated with the final product.

In some embodiments, this iterative process of producing inventory, transitioning product tanks from receiving to holding configuration, assigning inventory to demands, modifying the long-horizon optimized plan, generating updated group specifications, and performing subsequent optimization iterations continues until all target amounts for all product grades of all final products in the long-horizon optimized plan have been satisfied. This iterative approach enables the apparatus 200 to dynamically adapt to changing conditions and optimize production across multiple product grades and final products over the optimization time horizon.

In some examples, initiating performance of one or more optimization actions comprises connecting the one or more blenders to a second product tank. For example, after a first product tank transitions from receiving configuration to holding configuration, the apparatus 200 may cause the one or more blenders to be connected to a second product tank such that the second product tank operates in a receiving configuration and receives output from the blenders. This enables continuous production of final products without interruption, as the blenders can continue outputting product to the second product tank while the first product tank holds its accumulated inventory for subsequent operations. In some embodiments, the second product tank may be a different physical tank from the first product tank. In some embodiments, the same physical tank may be reused after its inventory has been lifted or otherwise removed, transitioning back from holding configuration to receiving configuration for a subsequent production cycle.

In some examples, initiating performance of one or more optimization actions comprises causing transmission of the inventory to fulfill the set of demands. In some embodiments, causing transmission of the inventory comprises initiating a lifting operation to transfer inventory from a holding tank to fulfill one or more product demands, wherein the holding tank comprises a product tank operating in a holding configuration. The lifting operation may involve physically transferring the inventory from the holding tank to a transportation vessel, pipeline, or other delivery mechanism for conveyance to a customer location. In some embodiments, causing transmission of the inventory comprises generating or executing a lift schedule that defines timestamps or timestamp intervals at which final products are to be exported from the processing plant. The lift schedule may be generated based on the predicted available inventories of final products in product tanks as defined by the configuration of the processing plant, the short-horizon optimized plan, and the long-horizon optimized plan. For example, the lift schedule may arrange lifts of particular amounts of final products at particular time slices such that no product tank overflows or underflows based on the current and future operation of the processing plant.

In some embodiments, causing transmission of the inventory comprises generating or executing a lift schedule that defines timestamps or timestamp intervals at which final products are to be exported from the processing plant. In some embodiments, causing transmission of the inventory comprises causing delivery of the inventory to one or more customers in accordance with confirmed orders earmarked for the inventory. For example, if the inventory in a holding tank has been assigned to a confirmed order for a particular customer with a specified delivery date, the apparatus 200 may cause the inventory to be lifted and delivered to that customer at or near the specified delivery date. In some embodiments, the method 1000 includes asynchronously tracking inventory consumption in holding tanks based on real-time product lifting flow rates, and any discrepancies are compensated by adjusting future product production. For example, as products are lifted from holding tanks for delivery to customers, the apparatus 200 may monitor the lifting flow rates in real-time and update inventory levels accordingly. In some embodiments, the asynchronous inventory tracking may track and update lifted products, as opposed to spent components, which enables the system to maintain accurate records of product inventories independently of component-level tracking. In some embodiments, the asynchronous tracking of inventory consumption enables the lift scheduling to be decoupled from plant economics. This decoupling simplifies the lift scheduling process and enables remedial adjustments such as delaying or advancing lifting start times to avoid insufficient or excessive inventories in product tanks.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method comprising:
generating a set of group specifications for a final product associated with a long-horizon optimized plan for a process plant based on a first model selected from one or more models, wherein the set of group specifications comprises a first group specification for a product parameter associated with the final product, and wherein the final product is associated with a group of product grades of the final product;
causing operation of one or more blenders associated with the process plant to output into a product tank connected to the one or more blenders, inventory comprising the final product with the first group specification;
in response to determining that the inventory within the product tank is associated with a predefined target amount, causing the product tank to transition from a receiving configuration to a holding configuration; and
initiating performance of one or more optimization actions.

2. The computer-implemented method of claim 1, wherein the first model is selected from the one or more models based on a tunable parameter value associated with the first model.

3. The computer-implemented method of claim 2, wherein the one or more models comprise (i) a conservative model associated with a first tunable parameter value, (ii) an average-based model associated with a second tunable parameter value, and (iii) a greedy model associated with a third tunable parameter value.

4. The computer-implemented method of claim 1, wherein causing the product tank to transition from the receiving configuration to the holding configuration comprises causing the product tank to be disconnected from the one or more blenders.

5. The computer-implemented method of claim 1, wherein causing operation of the one or more blenders to output the final product comprises:
performing a short-horizon optimization process based at least in part on the long-horizon optimized plan to generate at least one optimized operational parameter; and
applying the at least one optimized operational parameter to control at least one blender of the one or more blenders.

6. The computer-implemented method of claim 5, wherein the at least one optimized operational parameter corresponds to flowrate for at least one blender of the one or more blenders.

7. The computer-implemented method of claim 1, wherein initiating performance of the one or more optimization actions comprises:
assigning the inventory to a set of product demands associated with the final product.

8. The computer-implemented method of claim 7, wherein the set of product demands comprises a confirmed order corresponding to a first product grade.

9. The computer-implemented method of claim 8, wherein initiating the one or more optimization actions further comprises:
modifying the long-horizon optimized plan by removing an amount corresponding to inventory within the product tank from a target amount associated with the final product to generate a modified long-horizon optimized plan.

10. The computer-implemented method of claim 9, wherein initiating the one or more optimization actions further comprises:
generating a second set of group specifications for a subsequent short-horizon optimization process based on the modified long-horizon optimized plan.

11. The computer-implemented method of claim 10, wherein the second set of group specifications comprises a second group specification for the product parameter associated with the final product, wherein the first group specification and the second group specification are different relative to each other.

12. The computer-implemented method of claim 1, wherein the first model comprises a conservative model, wherein the first group specification comprises one or more of an upper specification limit associated with a first product grade from the group of product grades or a lower specification limit associated with the first product grade from the group of product grades.

13. The computer-implemented method of claim 1, wherein initiating performance of one or more optimization actions comprises connecting the one or more blenders to a second product tank.

14. An apparatus comprising at least one processor and at least one memory storing instructions that, when executed by the at least one processor, cause the apparatus to:
generate a set of group specifications for a final product associated with a long-horizon optimized plan for a process plant based on a first model selected from one or more models, wherein the set of group specifications comprises a first group specification for a product parameter associated with the final product, and wherein the final product is associated with a group of product grades of the final product;
cause operation of one or more blenders associated with the process plant to output into a product tank connected to the one or more blenders, inventory comprising the final product with the first group specification;
in response to determining that the inventory within the product tank is associated with a predefined target amount, cause the product tank to transition from a receiving configuration to a holding configuration; and
initiate performance of one or more optimization actions.

15. At least one non-transitory computer-readable storage medium, the at least one non-transitory computer-readable storage medium having computer coded instructions configured to, when executed by at least one processor:
generate a set of group specifications for a final product associated with a long-horizon optimized plan for a process plant based on a first model selected from one or more models, wherein the set of group specifications comprises a first group specification for a product parameter associated with the final product, and wherein the final product is associated with a group of product grades of the final product;
cause operation of one or more blenders associated with the process plant to output into a product tank connected to the one or more blenders, inventory comprising the final product with the first group specification;
in response to determining that the inventory within the product tank is associated with a predefined target amount, cause the product tank to transition from a receiving configuration to a holding configuration; and
initiate performance of one or more optimization actions.
